(19) Europäisches Patentamt
European Patent Office
Office européen des brevets

(11) **EP 4 779 905 A1**

(12) **EUROPEAN PATENT APPLICATION**
published in accordance with Art. 153(4) EPC

(43) Date of publication:
**22.07.2026 Bulletin 2026/30**

(21) Application number: **24870918.0**

(22) Date of filing: **26.09.2024**

(51) International Patent Classification (IPC):
**H04B 17/309** (2015.01) **H04B 7/0417** (2017.01)

(52) Cooperative Patent Classification (CPC):
**H04B 7/0417; H04B 7/06; H04B 17/309**

(86) International application number:
**PCT/CN2024/121595**

(87) International publication number:
**WO 2025/067379 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311281404**

(71) Applicant: **HUAWEI TECHNOLOGIES CO., LTD.
Shenzhen 518129 (CN)**

(72) Inventors:
• **CHEN, Jiaxuan
Shenzhen, Guangdong 518129 (CN)**
• **LI, Ting
Shenzhen, Guangdong 518129 (CN)**
• **SUN, Yan
Shenzhen, Guangdong 518129 (CN)**
• **LIANG, Jing
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS, AND READABLE STORAGE MEDIUM**

(57) This application relates to the field of mobile communication, and in particular, to a communication method and apparatus, and a readable storage medium, and may be applied to an NR protocol framework, a 6G protocol framework, or the like. The method includes: A UE obtains N pieces of channel information, and sends first information to a base station, where the first information indicates a compression and feedback method for the N pieces of channel information, and the compression and feedback method includes one or both of the following: a quantity of pieces of channel feedback information or a correspondence between channel feedback information and channel information, where one piece of channel information corresponds to one or more pieces of channel feedback information. According to embodiments of this application, flexibility of channel information feedback can be improved.

FIG. 6

## Description

This application claims priority to Chinese Patent Application No. 202311281404.8, filed with the China National Intellectual Property Administration on September 28, 2023 and entitled "COMMUNICATION METHOD AND APPARATUS, AND READABLE STORAGE MEDIUM", which is incorporated herein by reference in its entirety.

## TECHNICAL FIELD

This application relates to the field of communication technologies, and in particular, to a communication method and apparatus, and a readable storage medium.

## BACKGROUND

With development of massive multiple-input multiple-output (multiple-input multiple-output, MIMO) systems, services supported by the systems are increasing, and higher requirements are imposed on the communication systems in terms of system capacities, communication latency, and the like. A plurality of base stations serve a user in a coordinated manner, or a base station serves a user by using channels in a plurality of frequency bands, so that a quantity of simultaneously supported data transmission streams can be increased, to increase a rate.

To implement coordinated transmission between base stations or data transmission in a plurality of frequency bands, a base station needs to obtain channel state information (channel state information, CSI) of downlink channels of the plurality of base stations or in the plurality of frequency bands, and then determine a precoding matrix, user scheduling, and the like based on the CSI. However, in a frequency division duplex (frequency division duplex, FDD)-based communication system that is widely used currently, there is no reciprocity between uplink and downlink channels, and a user equipment (user equipment, UE) needs to perform uplink feedback, so that a base station obtains CSI of a downlink channel. For example, the base station sends a downlink reference signal to the UE, and the UE receives the downlink reference signal. Because the UE has known sending information of the downlink reference signal, the UE may estimate (measure), based on the received downlink reference signal, a downlink channel through which the downlink reference signal passes. Then, the UE may generate the CSI based on the downlink channel matrix obtained through measurement, and feed back the CSI to the base station.

Currently, an important component of CSI feedback is a precoding matrix indicator (precoding matrix indicator, PMI), to be specific, quantizing a channel matrix or a precoding matrix by using bits "0" and "1". A PMI design (also referred to as a codebook design) is a basic issue in a mobile communication system. In a conventional codebook design method, a series of precoding matrices and corresponding numbers are predefined (agreed on) in a protocol, and these precoding matrices may also be referred to as codewords. A channel matrix or a precoding matrix may be approximately expressed by using a predefined codeword or a linear combination of a plurality of codewords. Therefore, a UE may feed back, to a base station by using the PMI, one or both of a number corresponding to a codeword and a weighting coefficient, so that the base station recovers the channel matrix or the precoding matrix. In the conventional method, a codebook design needs to be predefined for each CSI feedback scenario. For example, a set of codebooks is predefined for channel information feedback for a plurality of stations, and a set of codebooks is predefined for channel information feedback for a plurality of frequencies. With continuous expansion of scenarios, a quantity of predefined codebooks continuously increases. Consequently, the CSI feedback is not sufficiently flexible.

## SUMMARY

Embodiments of this application provide a communication method and apparatus, and a readable storage medium, to improve flexibility of channel information feedback, and improve feedback accuracy while reducing feedback overheads.

The following describes this application from different aspects. It should be understood that the following implementations and beneficial effects of different aspects may be mutually referenced.

According to a first aspect, this application provides a communication method. The method is applied to a second communication apparatus, for example, a UE, or a component, for example, a circuit or a chip, that is used in the second communication apparatus. The method includes: obtaining N pieces of channel information, and sending first information, where the first information indicates a compression and feedback method for the N pieces of channel information, and the compression and feedback method may include one or both of the following: a quantity of pieces of channel feedback information or a correspondence between channel feedback information and channel information. In other words, the first information may indicate one or both of the following: the quantity of pieces of channel feedback information or the correspondence between the channel feedback information and the channel information. It may be understood that when the first information indicates either of the quantity of pieces of channel feedback information and the correspondence between the channel feedback information and the channel information, the other one may be predefined, preconfigured, or the like. For example, if the first information indicates the quantity of pieces of channel feedback information, the correspondence between the channel feedback information and the channel information may be predefined or preconfigured. In other words, the first information may be for determining the compression and feedback method for the N pieces of channel information.

One piece of channel information corresponds to one or more pieces of channel feedback information. N is an integer greater than or equal to 2.

The term "compression and feedback method" in this application may be understood as a compressed-information feedback method, and details are not described below again.

The channel information in this application may represent a channel. The channel information may be full channel information, for example, a channel response (for example, a complex matrix whose dimension is a quantity of receive antenna ports $\times$ a quantity of transmit antenna ports $\times$ a quantity of sub-bands), or may be an eigenvector obtained through singular value decomposition (singular value decomposition, SVD) on the channel response or an eigenmatrix including a plurality of eigenvectors. The channel information may be obtained by the communication apparatus by performing channel measurement based on a reference signal.

The channel feedback information in this application may be obtained by compressing the channel information by using an artificial intelligence (artificial intelligence, AI) model. In this case, the correspondence between the channel feedback information and the channel information in this application may also be understood as a correspondence between an output and an input of the AI model.

In this application, the first information indicates a specific compression and feedback method to be used, so that flexibility of channel information feedback can be improved. In addition, in this application, the channel information may be further compressed by using the AI model, so that feedback accuracy can be improved while feedback overheads are reduced.

With reference to the first aspect, in a possible implementation, after the sending the first information, the method further includes: sending third information, where the third information includes channel feedback information obtained by processing the N pieces of channel information by using the compression and feedback method indicated by the first information.

With reference to the first aspect, in a possible implementation, the obtaining the N pieces of channel information includes: receiving N reference signals; and performing channel measurement based on the N reference signals to obtain the N pieces of channel information. All or some of the N reference signals may be from a same communication apparatus or different communication apparatuses. Transmission frequency bands of the N reference signals may be the same, may be partially the same, or may be completely different. This is not limited in this application.

In this application, a unified compression and feedback method may be further used in scenarios in which the UE feeds back a plurality of pieces of channel information, such as coordinated transmission between a plurality of base stations and in a plurality of frequency bands.

According to a second aspect, this application provides a communication method. The method is applied to a first communication apparatus, for example, a base station, or a part of the base station. The method includes: receiving first information, where the first information indicates a compression and feedback method for N pieces of channel information; and determining the compression and feedback method based on the first information, where the compression and feedback method includes one or both of the following: a quantity of pieces of channel feedback information or a correspondence between channel feedback information and channel information. In other words, the first information may indicate one or both of the following: the quantity of pieces of channel feedback information or the correspondence between the channel feedback information and the channel information. It may be understood that when the first information indicates either of the quantity of pieces of channel feedback information and the correspondence between the channel feedback information and the channel information, the other one may be predefined, preconfigured, or the like. For example, if the first information indicates the quantity of pieces of channel feedback information, the correspondence between the channel feedback information and the channel information may be predefined or preconfigured. In other words, the first information may be for determining the compression and feedback method for the N pieces of channel information.

One piece of channel information corresponds to one or more pieces of channel feedback information. N is an integer greater than or equal to 2.

With reference to the second aspect, in a possible implementation, after the receiving the first information, the method further includes: receiving third information, where the third information includes channel feedback information obtained by processing the N pieces of channel information by using the compression and feedback method indicated by the first information; and recovering one or more pieces of channel information based on the compression and feedback method indicated by the first information and at least one piece of channel feedback information included in the third information. A quantity of pieces of channel feedback information included in the third information is related to the compression and feedback method indicated by the first information. For details, refer to descriptions in the following embodiments, and the details are not described herein again.

With reference to the second aspect, in a possible implementation, before the receiving the first information, the method further includes: sending one or more reference signals, where the reference signal is for determining channel information.

According to a third aspect, this application provides a communication apparatus. The communication apparatus is configured to perform steps or functions performed by a second communication apparatus. The communication apparatus includes: a processing unit, configured to obtain N pieces of channel information, where N is an integer greater than or equal to 2; and a transceiver unit, configured to send first information, where the first information indicates a compression and feedback method for the N pieces of channel information, and the compression and feedback method includes one or both of the following: a quantity of pieces of channel feedback information or a correspondence between channel feedback information and channel information, where one piece of channel information corresponds to one or more pieces of channel feedback information.

With reference to the third aspect, in a possible implementation, the transceiver unit is further configured to send third information, where the third information includes channel feedback information obtained by processing the N pieces of channel information by using the compression and feedback method indicated by the first information.

With reference to the third aspect, in a possible implementation, the processing unit is specifically configured to: control the transceiver unit to receive N reference signals, and perform channel measurement based on the N reference signals to obtain the N pieces of channel information. All or some of the N reference signals may be from a same communication apparatus or different communication apparatuses. Transmission frequency bands of the N reference signals may be the same, may be partially the same, or may be completely different. This is not limited in this application.

According to a fourth aspect, this application provides a communication apparatus. The communication apparatus is configured to perform steps or functions performed by a first communication apparatus. The communication apparatus includes: a transceiver unit, configured to receive first information, where the first information indicates a compression and feedback method for N pieces of channel information, and the compression and feedback method includes one or both of the following: a quantity of pieces of channel feedback information or a correspondence between channel feedback information and channel information, where one piece of channel information corresponds to one or more pieces of channel feedback information, and N is an integer greater than or equal to 2; and a processing unit, configured to determine the compression and feedback method based on the first information.

With reference to the fourth aspect, in a possible implementation, the transceiver unit is further configured to receive third information, where the third information includes channel feedback information obtained by processing the N pieces of channel information by using the compression and feedback method indicated by the first information. The processing unit is further configured to recover one or more pieces of channel information based on the compression and feedback method indicated by the first information and at least one piece of channel feedback information included in the third information. A quantity of pieces of channel feedback information included in the third information is related to the compression and feedback method indicated by the first information. For details, refer to descriptions in the following embodiments, and the details are not described herein again.

With reference to the fourth aspect, in a possible implementation, the transceiver unit is further configured to send one or more reference signals, where the reference signal is for determining channel information.

With reference to any one of the first aspect to the fourth aspect, in a possible implementation, the compression and feedback method for the N pieces of channel information is determined based on a correlation between at least two pieces of channel information in the N pieces of channel information. For a specific determining manner, refer to descriptions in the following embodiments. Details are not described herein again.

In this application, an appropriate compression and feedback method may be flexibly selected based on a similarity degree between channel information, so that complexity of channel compression and feedback can be reduced, and a channel information compression ratio can be improved.

With reference to any one of the first aspect to the fourth aspect, in a possible implementation, the compression and feedback method for the N pieces of channel information includes: The N pieces of channel information correspond to M+K pieces of channel feedback information, where one piece of channel feedback information in the K pieces of channel feedback information represents common information of at least two channel information subsets in M channel information subsets, one channel information subset includes one or more pieces of channel information in the N pieces of channel information, and a union set of the M channel information subsets is equal to the N pieces of channel information. One piece of channel feedback information in the M pieces of channel feedback information represents specific information of one channel information subset, where both M and K are positive integers less than N.

For example, one piece of channel feedback information may be obtained by processing (for example, performing common-feature extraction and compression on) at least two channel information subsets in the M channel information subsets by using a first encoder (encoder). The first encoder may be implemented by an AI model. One piece of channel feedback information may be obtained by processing (for example, performing specific-feature extraction and compression on), by using a second encoder (encoder), one channel information subset and common information corresponding to the channel information subset. The second encoder may be implemented by an AI model. The first encoder and the second encoder are different.

For example, the M channel information subsets are determined based on a correlation between the N pieces of channel information. For example, the N pieces of channel information may be classified into the M channel information subsets by using a clustering algorithm, where a distance between sample objects in the clustering algorithm is determined based on a correlation between channel information (for example, an inner product between vectors). For example, the distance between the sample objects is 1-Correlation between the channel information or exp(-Correlation between channels). exp() represents an exponential function with a natural constant e as a base. Details are not described below again. It may be understood that a higher correlation between channel information indicates a smaller distance between sample objects corresponding to the channel information.

For example, the N pieces of channel information correspond to N reference signal resources, and the N reference signal resources belong to one or more reference signal resource sets. The M channel information subsets may alternatively be determined based on the reference signal resource set. For example, channel information corresponding to reference signal resources that belong to a same reference signal resource set is classified into one channel information subset. In other words, reference signal resources corresponding to channel information in one channel information subset all belong to a same reference signal resource set.

In the compression and feedback method provided in this application, common features of a plurality of pieces of channel information are jointly compressed into one piece of channel feedback information, so that a similarity between the plurality of pieces of channel information can be fully used, a compression degree is high, and complexity is low. This is applicable to a scenario in which the correlation between the N pieces of channel information is moderate.

With reference to any one of the first aspect to the fourth aspect, in a possible implementation, the compression and feedback method for the N pieces of channel information includes: The N pieces of channel information correspond to M pieces of channel feedback information, where one piece of channel feedback information represents content of one channel information subset. One channel information subset includes one or more pieces of channel information in the N pieces of channel information. A union set of M channel information subsets is equal to the N pieces of channel information, and an intersection set of any two channel information subsets in the M channel information subsets is an empty set. M is a positive integer less than N.

For example, one piece of channel feedback information may be obtained by processing (for example, compressing) one channel information subset in the M channel information subsets by using an encoder (encoder). The encoder may be implemented by an AI model.

For example, the M channel information subsets are determined based on a correlation between the N pieces of channel information. For example, the N pieces of channel information may be classified into the M channel information subsets by using a clustering algorithm, where a distance between sample objects in the clustering algorithm is determined based on a correlation between channel information (for example, an inner product between vectors). For example, the distance between the sample objects is 1-Correlation between the channel information or exp(-Correlation between channels).

For example, the N pieces of channel information correspond to N reference signal resources, and the N reference signal resources belong to one or more reference signal resource sets. The M channel information subsets may alternatively be determined based on the reference signal resource set. For example, channel information corresponding to reference signal resources that belong to a same reference signal resource set is classified into one channel information subset. In other words, reference signal resources respectively corresponding to all channel information in one channel information subset all belong to a same reference signal resource set.

In the compression and feedback method provided in this application, a plurality of pieces of channel information are jointly compressed into one piece of channel feedback information, so that a similarity between the plurality of pieces of channel information can be fully used, and a compression degree is high. This is applicable to a scenario in which the correlation between the N pieces of channel information is high.

With reference to any one of the first aspect to the fourth aspect, in a possible implementation, the compression and feedback method for the N pieces of channel information includes: The N pieces of channel information correspond to N pieces of channel feedback information, where one piece of channel feedback information represents content of one piece of channel information.

For example, one piece of channel feedback information may be obtained by processing (for example, compressing) one piece of channel information by using an encoder (encoder). The encoder may be implemented by an AI model.

In the compression and feedback method provided in this application, the channel information is compressed by using the AI model, so that the feedback overheads can be reduced, and the feedback accuracy can be improved.

With reference to any one of the first aspect to the fourth aspect, in a possible implementation, the first information includes an identifier of the compression and feedback method. For example, several compression and feedback methods may be predefined, and each predefined compression and feedback method includes a quantity of pieces of channel feedback information and a correspondence between channel feedback information and channel information. For example, there are the foregoing three compression and feedback methods: (1) The N pieces of channel information correspond to the M+K pieces of channel feedback information, where one piece of channel feedback information in the K pieces of channel feedback information represents common information of at least two channel information subsets in the M channel information subsets, and one piece of channel feedback information in the M pieces of channel feedback information represents specific information of one channel information subset. (2) The N pieces of channel information correspond to the M pieces of channel feedback information, where one piece of channel feedback information represents content of one channel information subset. (3) The N pieces of channel information correspond to the N pieces of channel feedback information, where one piece of channel feedback information represents content of one piece of channel information. Then, a unique identifier is set for each predefined compression and feedback method. A specific setting manner is not limited in this application, provided that a receiving party and a sending party agree on a correspondence between a predefined compression and feedback method and an identifier. Therefore, the identifier of the compression and feedback method may be carried in the first information, so that the compression and feedback method for the N pieces of channel information is determined. It may be understood that the compression and feedback methods herein are merely examples. During actual application, more or fewer compression and feedback methods may be predefined. This is not limited in this application. It may be further understood that different quantities of pieces of channel feedback information may correspond to different compression and feedback methods, and different identifiers may be used for the quantities of pieces of channel feedback information. Certainly, different correspondences between channel feedback information and channel information may also correspond to different compression and feedback methods, and different identifiers may be used for the correspondences.

Alternatively, the first information includes one or both of the following: the quantity of pieces of channel feedback information corresponding to the N pieces of channel information or a correspondence between each piece of channel feedback information and one or more pieces of channel information in the N pieces of channel information. For example, a 0/1 matrix may indicate the quantity of pieces of channel feedback information and the correspondence between the channel feedback information and the N pieces of channel information. In the 0/1 matrix, a row represents channel information, a column represents channel feedback information, and a quantity of columns in the 0/1 matrix is the quantity of pieces of channel feedback information. If an element in an $i^{th}$ row and a $j^{th}$ column is 1, it indicates that a $j^{th}$ piece of channel feedback information corresponds to an $i^{th}$ piece of channel information. If an element in an $i^{th}$ row and a $j^{th}$ column is 0, it indicates that there is no correspondence between a $j^{th}$ piece of channel feedback information and an $i^{th}$ piece of channel information. For another example, a list may alternatively indicate the quantity of pieces of channel feedback information and the correspondence between each piece of channel feedback information and the channel information. One row in the list represents one piece of channel feedback information and channel information corresponding to the piece of channel feedback information, and a quantity of rows in the list represents the quantity of pieces of channel feedback information.

It may be understood that a specific representation form of the first information is not limited in this application, in other words, a signaling form of the first information is not limited in this application. Any signaling indication manner that can represent the content of the first information falls within the protection scope of this application.

This application provides two manners of indicating the compression and feedback method, to align understandings of the UE and a base station side on the channel feedback information, and help the base station recover the channel information.

According to a fifth aspect, this application provides a communication method. The method is applied to a first communication apparatus, for example, a base station, or a part of the base station. The method includes: determining a compression and feedback method for N pieces of first channel information, and sending first information, where the first information indicates the compression and feedback method for the N pieces of first channel information, and the compression and feedback method includes one or both of the following: a quantity of pieces of channel feedback information or a correspondence between channel feedback information and first channel information. In other words, the first information may indicate one or both of the following: the quantity of pieces of channel feedback information or the correspondence between the channel feedback information and the first channel information. It may be understood that when the first information indicates either of the quantity of pieces of channel feedback information and the correspondence between the channel feedback information and the first channel information, the other one may be predefined, preconfigured, or the like. For example, if the first information indicates the quantity of pieces of channel feedback information, the correspondence between the channel feedback information and the first channel information may be predefined or preconfigured. In other words, the first information may be for determining the compression and feedback method for the N pieces of first channel information.

One piece of first channel information corresponds to one or more pieces of channel feedback information. N is an integer greater than or equal to 2.

In this application, the first channel information may be downlink channel information.

In this application, the first information indicates a specific compression and feedback method to be used, so that flexibility of channel information feedback can be improved. In addition, in this application, the channel information may be further compressed by using an AI model, so that feedback accuracy can be improved while feedback overheads are reduced.

With reference to the fifth aspect, in a possible implementation, the method further includes: The first communication apparatus receives third information, where the third information includes channel feedback information obtained by processing the N pieces of first channel information by using the compression and feedback method indicated by the first information. The first communication apparatus recovers one or more pieces of first channel information based on the compression and feedback method and at least one piece of channel feedback information included in the third information. A quantity of pieces of channel feedback information included in the third information is related to the compression and feedback method indicated by the first information. For details, refer to descriptions in the following embodiments, and the details are not described herein again.

With reference to the fifth aspect, in a possible implementation, the method further includes: The first communication apparatus receives second information, where the second information includes a correlation between at least two pieces of first channel information in the N pieces of first channel information. The correlation between the at least two pieces of first channel information in the N pieces of first channel information may be for determining the compression and feedback method for the N pieces of first channel information. For a specific determining manner, refer to descriptions in the following embodiments. Details are not described herein again.

In this application, a UE notifies the base station of the correlation between the channel information by using the second information, and the base station flexibly selects an appropriate compression and feedback method based on the correlation between the channel information, so that complexity of channel compression and feedback can be reduced, and a channel information compression ratio can be improved.

With reference to the fifth aspect, in a possible implementation, the first channel information is determined based on a first reference signal. The N pieces of first channel information may be determined based on N first reference signals. All or some of the N first reference signals may be from a same communication apparatus or different communication apparatuses. Transmission frequency bands of the N first reference signals may be the same, may be partially the same, or may be completely different. This is not limited in this application. For example, the first reference signal is an uplink reference signal.

In this application, a unified compression and feedback method may be further used in scenarios in which the UE feeds back a plurality of pieces of channel information, such as coordinated transmission between a plurality of base stations and in a plurality of frequency bands.

The method further includes: The first communication apparatus receives one or more second reference signals, where the second reference signal is for determining second channel information. The first communication apparatus obtains a correlation between at least two pieces of second channel information in L pieces of second channel information, where the correlation between the at least two pieces of second channel information in the L pieces of second channel information is for determining the compression and feedback method for the N pieces of first channel information. For a specific determining manner, refer to descriptions in the following embodiments. Details are not described herein again. L is an integer greater than or equal to 2.

In this application, the second channel information may be uplink channel information, and the second reference signal may be an uplink reference signal.

In this application, the base station determines the compression and feedback method for the downlink channel information (namely, the first channel information) by using the correlation between the uplink channel information (namely, the second channel information). This is applicable to a scenario in which there is reciprocity between uplink and downlink channels or an uplink channel is not severely aged. In addition, the appropriate compression and feedback method may be flexibly selected, to reduce the complexity of the channel compression and feedback, and improve the channel information compression ratio.

According to a sixth aspect, this application provides a communication method. The method is applied to a second communication apparatus, for example, a UE. The method includes: obtaining N pieces of first channel information, where N is an integer greater than or equal to 2; and receiving first information, where the first information indicates a compression and feedback method for the N pieces of first channel information, and the compression and feedback method includes one or both of the following: a quantity of pieces of channel feedback information and a correspondence between channel feedback information and first channel information. In other words, the first information may indicate one or both of the following: the quantity of pieces of channel feedback information or the correspondence between the channel feedback information and the first channel information. It may be understood that when the first information indicates either of the quantity of pieces of channel feedback information and the correspondence between the channel feedback information and the first channel information, the other one may be predefined, preconfigured, or the like. For example, if the first information indicates the quantity of pieces of channel feedback information, the correspondence between the channel feedback information and the first channel information may be predefined or preconfigured. In other words, the first information may be for determining the compression and feedback method for the N pieces of first channel information.

One piece of first channel information corresponds to one or more pieces of channel feedback information. N is an integer greater than or equal to 2.

With reference to the sixth aspect, in a possible implementation, the method further includes: The second communication apparatus sends third information, where the third information includes channel feedback information obtained by processing the N pieces of first channel information in the compression and feedback method indicated by the first information.

With reference to the sixth aspect, in a possible implementation, the method further includes: The second communication apparatus sends second information, where the second information includes a correlation between at least two pieces of first channel information in the N pieces of first channel information. The correlation between the at least two pieces of first channel information in the N pieces of first channel information may be for determining the compression and feedback method for the N pieces of first channel information. For a specific determining manner, refer to descriptions in the following embodiments. Details are not described herein again.

With reference to the sixth aspect, in a possible implementation, the first channel information is determined based on a first reference signal received by the second communication apparatus. The method further includes: The second communication apparatus sends one or more second reference signals, where the second reference signal is for determining second channel information, and a correlation between second channel information is for determining the compression and feedback method for the N pieces of first channel information. For a specific determining manner, refer to descriptions in the following embodiments. Details are not described herein again.

According to a seventh aspect, this application provides a communication apparatus. The communication apparatus is configured to perform steps or functions performed by a first communication apparatus. The communication apparatus includes: a processing unit, configured to determine a compression and feedback method for N pieces of first channel information; and a transceiver unit, configured to send first information, where the first information indicates the compression and feedback method for the N pieces of first channel information, and the compression and feedback method includes one or both of the following: a quantity of pieces of channel feedback information or a correspondence between channel feedback information and first channel information, where one piece of first channel information corresponds to one or more pieces of channel feedback information, and N is an integer greater than or equal to 2.

With reference to the seventh aspect, in a possible implementation, the transceiver unit is further configured to receive third information, where the third information includes channel feedback information obtained by processing the N pieces of first channel information in the compression and feedback method indicated by the first information. The processing unit is further configured to recover one or more pieces of first channel information based on the compression and feedback method and at least one piece of channel feedback information included in the third information. A quantity of pieces of channel feedback information included in the third information is related to the compression and feedback method indicated by the first information. For details, refer to descriptions in the following embodiments, and the details are not described herein again.

With reference to the seventh aspect, in a possible implementation, the transceiver unit is further configured to receive second information, where the second information includes a correlation between at least two pieces of first channel information in the N pieces of first channel information. The correlation between the at least two pieces of first channel information in the N pieces of first channel information may be for determining the compression and feedback method for the N pieces of first channel information. For a specific determining manner, refer to descriptions in the following embodiments. Details are not described herein again.

With reference to the seventh aspect, in a possible implementation, the first channel information is determined based on a first reference signal. The N pieces of first channel information may be determined based on N first reference signals. All or some of the N first reference signals may be from a same communication apparatus or different communication apparatuses. Transmission frequency bands of the N first reference signals may be the same, may be partially the same, or may be completely different. This is not limited in this application. For example, the first reference signal is an uplink reference signal.

The transceiver unit is further configured to receive one or more second reference signals, where the second reference signal is for determining second channel information. The processing unit is further configured to obtain a correlation between at least two pieces of second channel information in L pieces of second channel information, where the correlation between the at least two pieces of second channel information in the L pieces of second channel information is for determining the compression and feedback method for the N pieces of first channel information. For a specific determining manner, refer to descriptions in the following embodiments. Details are not described herein again. L is an integer greater than or equal to 2.

According to an eighth aspect, this application provides a communication apparatus. The communication apparatus is configured to perform steps or functions performed by a second communication apparatus. The communication apparatus includes: a processing unit, configured to obtain N pieces of first channel information, where N is an integer greater than or equal to 2; and a transceiver unit, configured to receive first information, where the first information indicates a compression and feedback method for the N pieces of first channel information, and the compression and feedback method includes one or both of the following: a quantity of pieces of channel feedback information or a relationship between channel feedback information and first channel information, where one piece of first channel information corresponds to one or more pieces of channel feedback information.

With reference to the eighth aspect, in a possible implementation, the transceiver unit is further configured to send third information, where the third information includes channel feedback information obtained by processing the N pieces of first channel information by using the compression and feedback method indicated by the first information.

With reference to the eighth aspect, in a possible implementation, the transceiver unit is further configured to send second information, where the second information includes a correlation between at least two pieces of first channel information in the N pieces of first channel information. The correlation between the at least two pieces of first channel information in the N pieces of first channel information may be for determining the compression and feedback method for the N pieces of first channel information. For a specific determining manner, refer to descriptions in the following embodiments. Details are not described herein again.

With reference to the eighth aspect, in a possible implementation, the first channel information is determined based on a first reference signal received by the second communication apparatus. The transceiver unit is further configured to send one or more second reference signals, where the second reference signal is for determining second channel information, and a correlation between second channel information is for determining the compression and feedback method for the N pieces of first channel information. For a specific determining manner, refer to descriptions in the following embodiments. Details are not described herein again.

With reference to any one of the fifth aspect to the eighth aspect, in a possible implementation, the compression and feedback method for the N pieces of first channel information includes: The N pieces of first channel information correspond to M+K pieces of channel feedback information, where one piece of channel feedback information in the K pieces of channel feedback information represents common information of at least two channel information subsets in M channel information subsets, one channel information subset includes one or more pieces of first channel information in the N pieces of first channel information, and a union set of the M channel information subsets is equal to the N pieces of first channel information. One piece of channel feedback information in the M pieces of channel feedback information represents specific information of one channel information subset, where both M and K are positive integers less than N. It may be understood that, in the compression and feedback method, all information of one channel information subset may be represented by two pieces of channel feedback information.

For example, one piece of channel feedback information may be obtained by processing (for example, performing common-feature extraction and compression on) at least two channel information subsets in the M channel information subsets by using a first encoder (encoder). The first encoder may be implemented by an AI model. One piece of channel feedback information may be obtained by processing (for example, performing specific-feature extraction and compression on), by using a second encoder (encoder), one channel information subset and common information corresponding to the channel information subset. The second encoder may be implemented by an AI model. The first encoder and the second encoder are different.

For example, the M channel information subsets are determined based on a correlation between the N pieces of first channel information. For example, the N pieces of first channel information may be classified into the M channel information subsets by using a clustering algorithm, where a distance between sample objects in the clustering algorithm is determined based on a correlation between first channel information (for example, an inner product between vectors). For example, the distance between the sample objects is 1-Correlation between the channel information or exp(-Correlation between channels).

For example, the N pieces of first channel information correspond to N reference signal resources, and the N reference signal resources belong to one or more reference signal resource sets. The M channel information subsets may alternatively be determined based on the reference signal resource set. For example, first channel information corresponding to reference signal resources that belong to a same reference signal resource set is classified into one channel information subset. In other words, reference signal resources corresponding to first channel information in one channel information subset all belong to a same reference signal resource set.

In the compression and feedback method provided in this application, common features of a plurality of pieces of first channel information are jointly compressed into one piece of channel feedback information, so that a similarity between the plurality of pieces of first channel information can be fully used, a compression degree is high, and complexity is low. This is applicable to a scenario in which the correlation between the N pieces of first channel information is moderate.

With reference to any one of the fifth aspect to the eighth aspect, in a possible implementation, the compression and feedback method for the N pieces of first channel information includes: The N pieces of first channel information correspond to M pieces of channel feedback information, where one piece of channel feedback information represents content of one channel information subset. One channel information subset includes one or more pieces of first channel information in the N pieces of first channel information. A union set of M channel information subsets is equal to the N pieces of first channel information, and an intersection set of any two channel information subsets in the M channel information subsets is an empty set. M is a positive integer less than N.

For example, one piece of channel feedback information may be obtained by processing (for example, compressing) one channel information subset in the M channel information subsets by using an encoder (encoder). The encoder may be implemented by an AI model.

For example, the M channel information subsets are determined based on a correlation between the N pieces of first channel information. For example, the N pieces of first channel information may be classified into the M channel information subsets by using a clustering algorithm, where a distance between sample objects in the clustering algorithm is determined based on a correlation between first channel information (for example, an inner product between vectors). For example, the distance between the sample objects is 1-Correlation between the channel information or exp(-Correlation between channels).

For example, the N pieces of first channel information correspond to N reference signal resources, and the N reference signal resources belong to one or more reference signal resource sets. The M channel information subsets may alternatively be determined based on the reference signal resource set. For example, first channel information corresponding to reference signal resources that belong to a same reference signal resource set is classified into one channel information subset. In other words, reference signal resources respectively corresponding to all first channel information in one channel information subset all belong to a same reference signal resource set.

In the compression and feedback method provided in this application, a plurality of pieces of first channel information are jointly compressed into one piece of channel feedback information, so that a similarity between the plurality of pieces of first channel information can be fully used, and a compression degree is high. This is applicable to a scenario in which the correlation between the N pieces of first channel information is high.

With reference to any one of the fifth aspect to the eighth aspect, in a possible implementation, the compression and feedback method for the N pieces of first channel information includes: The N pieces of first channel information correspond to N pieces of channel feedback information, where one piece of channel feedback information represents content of one piece of first channel information.

For example, one piece of channel feedback information may be obtained by processing (for example, compressing) one piece of first channel information by using an encoder (encoder). The encoder may be implemented by an AI model.

In the compression and feedback method provided in this application, the first channel information is compressed by using the AI model, so that the feedback overheads can be reduced, and the feedback accuracy can be improved.

With reference to any one of the fifth aspect to the eighth aspect, in a possible implementation, the first information includes an identifier of the compression and feedback method. Alternatively, the first information includes one or both of the following: the quantity of pieces of channel feedback information corresponding to the N pieces of first channel information or a correspondence between each piece of channel feedback information and one or more pieces of first channel information in the N pieces of first channel information.

This application provides two manners of indicating the compression and feedback method, to align understandings of the UE and a base station side on the channel feedback information, and help the base station recover the channel information.

According to a ninth aspect, this application provides a communication apparatus. The communication apparatus may include a processing circuit and a transceiver circuit, and the processing circuit is connected to the transceiver circuit. The transceiver circuit is configured to exchange (or send/receive, or input/output) information or data, and the processing circuit is configured to run program instructions, to cause the communication apparatus to perform the method according to any one of the first aspect, the second aspect, the fifth aspect, the sixth aspect, or the possible implementations of the aspects. The transceiver circuit may be a communication interface, an input/output interface, or a transceiver. The transceiver may be a radio frequency module in the communication apparatus, or may be a combination of the radio frequency module and an antenna. The transceiver circuit may be an input/output interface of a chip or a circuit.

According to a tenth aspect, this application provides a communication apparatus. The communication apparatus includes a processor, configured to perform the method according to any one of the first aspect, the second aspect, the fifth aspect, the sixth aspect, or the possible implementations of the aspects. Alternatively, the processor is configured to execute a program stored in a memory. When the program is executed, the method according to any one of the first aspect, the second aspect, the fifth aspect, the sixth aspect, or the possible implementations of the aspects is performed.

With reference to the tenth aspect, in a possible implementation, the memory is located outside the communication apparatus.

With reference to the tenth aspect, in a possible implementation, the memory is located inside the communication apparatus.

With reference to the tenth aspect, in a possible implementation, the processor and the memory may alternatively be integrated into one component, that is, the processor and the memory may alternatively be integrated together. For example, the communication apparatus may be a chip.

With reference to the tenth aspect, in a possible implementation, the communication apparatus further includes a transceiver. The transceiver is configured to receive or send first information. For example, the transceiver may be further configured to receive or send a reference signal. For example, the communication apparatus may be a terminal device or a network device.

According to an eleventh aspect, this application provides a readable storage medium. The readable storage medium stores program instructions; and when the program instructions are run on a computer, the computer is caused to perform the method according to any one of the first aspect, the second aspect, the fifth aspect, the sixth aspect, or the possible implementations of the aspects.

According to a twelfth aspect, this application provides a program product including program instructions. When the program product runs, the method according to any one of the first aspect, the second aspect, the fifth aspect, the sixth aspect, or the possible implementations of the aspects is performed.

According to a thirteenth aspect, this application provides an apparatus. The apparatus may be implemented in a form of a chip, or may be in a form of a device. The apparatus includes a processing circuit. The processing circuit is configured to read and execute a program stored in a memory, to perform the communication method according to one or more of the first aspect, the second aspect, the fifth aspect, the sixth aspect, or the possible implementations of the aspects. Optionally, the apparatus further includes the memory, and the memory is connected to the processing circuit via a circuit. Further, optionally, the apparatus further includes a communication interface, and the processing circuit is connected to the communication interface. The communication interface is configured to receive to-be-processed information. The processing circuit obtains the information from the communication interface, processes the information, and outputs a processing result through the communication interface. The communication interface may be an input/output interface.

Optionally, the processing circuit and the memory may be physically independent units, or the memory may be integrated with the processing circuit.

According to a fourteenth aspect, this application provides a communication system. The communication system includes a first communication apparatus and a second communication apparatus. The first communication apparatus is configured to perform the method according to any one of the second aspect, the fifth aspect, or the possible implementations of the aspects, and the second communication apparatus is configured to perform the method according to any one of the first aspect, the sixth aspect, or the possible implementations of the aspects.

For technical effects achieved in the foregoing aspects, mutually refer to the foregoing aspects, or refer to beneficial effects in method embodiments below. Details are not described herein again.

## BRIEF DESCRIPTION OF DRAWINGS

FIG. 1 is a diagram of a neural network according to an embodiment of this application;

FIG. 2 is a diagram of a structure of a neuron according to an embodiment of this application;

FIG. 3 is a simplified diagram of a communication system according to an embodiment of this application;

FIG. 4 is a diagram of a possible application architecture of a communication system according to an embodiment of this application;

FIG. 5 is another diagram of a possible application architecture of a communication system according to an embodiment of this application;

FIG. 6 is a schematic flowchart of a communication method according to an embodiment of this application;

FIG. 7a is a diagram of a compression and feedback method for channel information according to an embodiment of this application;

FIG. 7b is another diagram of a compression and feedback method for channel information according to an embodiment of this application;

FIG. 7c is still another diagram of a compression and feedback method for channel information according to an embodiment of this application;

FIG. 7d is yet another diagram of a compression and feedback method for channel information according to an embodiment of this application;

FIG. 8a is a diagram of channel information recovery according to an embodiment of this application;

FIG. 8b is another diagram of channel information recovery according to an embodiment of this application;

FIG. 8c is still another diagram of channel information recovery according to an embodiment of this application;

FIG. 8d is yet another diagram of channel information recovery according to an embodiment of this application;

FIG. 9 is another schematic flowchart of a communication method according to an embodiment of this application;

FIG. 10 is still another schematic flowchart of a communication method according to an embodiment of this application;
FIG. 11 is a diagram of a structure of a communication apparatus according to an embodiment of this application;
FIG. 12 is another diagram of a structure of a communication apparatus according to an embodiment of this application; and
FIG. 13 is still another diagram of a structure of a communication apparatus according to an embodiment of this application.

## DESCRIPTION OF EMBODIMENTS

The following clearly and completely describes technical solutions in embodiments of this application with reference to the accompanying drawings in embodiments of this application.

In descriptions of this application, words such as "first" and "second" are merely for distinguishing between different objects, and do not limit quantities and execution sequences. In addition, the words such as "first" and "second" do not indicate a definite difference. In addition, terms such as "include" and "have" and any other variants thereof are intended to cover a non-exclusive inclusion. For example, processes, methods, systems, products, devices, or the like that include a series of steps or units are not limited to listed steps or units, but optionally further include steps, units, or the like that are not listed, or optionally further include other steps or units inherent to these processes, methods, products, devices, or the like.

In the descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one (item)", "one or more of the following items (pieces)", or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In the descriptions of this application, terms such as "example" or "for example" represent giving an example, an illustration, or a description. Any embodiment or design scheme described as "example", "such as", or "for example" in this application should not be explained as being more preferred or having more advantages than another embodiment or design scheme. Exactly, use of the terms such as "example", "such as", or "for example" is intended to present a related concept in a specific manner.

It may be understood that, in the descriptions of this application, both "when" and "if" mean that an apparatus performs corresponding processing in an objective case, are not intended to limit time, and do not require a determining action during implementation of the apparatus, or do not mean that there is another limitation.

"Simultaneously" in this application may be understood as being at a same time point, may be understood as being in a period of time, or may be understood as being in a same periodicity, and may be specifically understood with reference to context.

In this application, unless otherwise specified, an element indicated in a singular form is intended to indicate "one or more", but does not indicate "one and only one".

In addition, terms "system" and "network" may be often used interchangeably in this specification.

It may be understood that, in embodiments of this application, "B corresponding to A", "A corresponds to B", or a similar expression thereof indicates that B is associated with A, or B may be determined based on A. However, it should be further understood that determining B according to (or based on) A does not mean that B is determined according to (or based on) A only, and B may alternatively be determined according to (or based on) A and/or other information.

The following briefly describes artificial intelligence (artificial intelligence, AI).

The artificial intelligence (artificial intelligence, AI) can enable machines to have human intelligence, for example, can enable the machines to simulate some intelligent human behaviors by using computer software and hardware. Usually, the artificial intelligence is a technology that presents human intelligence by using a normal computer program. The artificial intelligence may be defined as a machine or a computer that simulates humans and has cognitive functions, such as learning and problem-resolving, related to human thinking. The artificial intelligence can learn from past experience, make reasonable decisions, and respond quickly. An objective of the artificial intelligence is to understand intelligence by constructing symbolic reasoning or computer programs for reasoning.

Machine learning (machine learning) is an important technical way to implement the artificial intelligence. That is, problems in the artificial intelligence are resolved through the machine learning. A machine learning theory is mainly to design and analyze some algorithms that enable a computer to automatically "learn". A machine learning algorithm is an algorithm that automatically analyzes data to obtain a rule and uses the rule to predict unknown data. Because the machine learning algorithm involves a large quantity of statistical theories, the machine learning is particularly closely related to inferential statistics, and is also referred to as a statistical learning theory. The machine learning may be classified into supervised learning, unsupervised learning, and reinforcement learning.

An AI model is an algorithm or a computer program that can implement an AI function. The AI model represents a mapping relationship or function between an input and an output of the model. The AI model may be for inference (or prediction), to be specific, an output corresponding to a given input may be predicted by using the AI model. The output may also be referred to as an inference result. The AI model may be a neural network or another machine learning model.

The neural network (neural network, NN) is a specific implementation form of the machine learning, and is a mathematical model that simulates behavior characteristics of an animal neural network to process information. According to a universal approximation theorem, the neural network can approximate any continuous function in theory, so that the neural network has a capability of learning any mapping. Therefore, the neural network can perform abstract modeling accurately for a complex high-dimension problem. In a conventional communication system, a communication module is designed by relying on rich expert knowledge. However, in a deep neural network (deep neural network, DNN)-based communication system, an implicit pattern structure may be discovered from a large quantity of datasets, to establish a mapping relationship between data, and obtain better performance than that of a conventional modeling method.

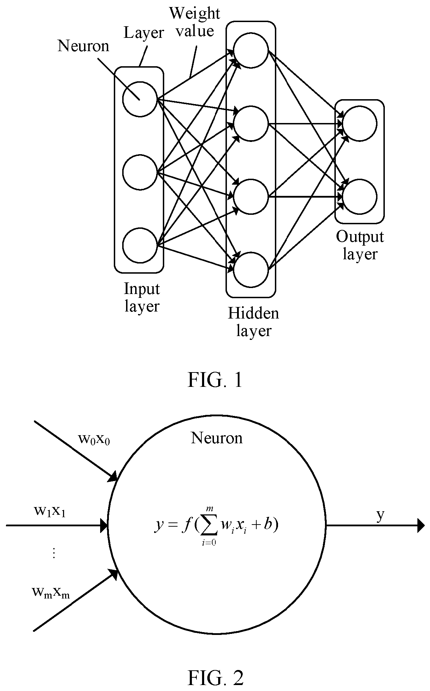

The neural network usually includes a plurality of layers of structures, and each layer may include one or more logical determining units. The logical determining unit is referred to as a neuron (Neuron). A depth and/or a width of the neural network are/is increased, so that an expression capability of the neural network can be improved, and more powerful information extraction and abstract modeling capabilities can be provided for a complex system. The depth of the neural network may be understood as a quantity of layers included in the neural network, and a quantity of neurons included in each layer may be referred to as a width of the layer. FIG. 1 is a diagram of a neural network according to an embodiment of this application. In an implementation, the neural network includes an input layer and an output layer. After processing a received input by using a neuron, the input layer of the neural network transfers a result to the output layer, and the output layer obtains an output result of the neural network. In another implementation, the neural network includes an input layer, a hidden layer, and an output layer. After processing a received input by using a neuron, the input layer of the neural network transfers a result to the intermediate hidden layer. The hidden layer transfers a computation result to the output layer or an adjacent hidden layer. Finally, the output layer obtains an output result of the neural network. One neural network may include one or more sequentially connected hidden layers. A quantity of hidden layers in the neural network is not limited in this application. A DNN usually includes a plurality of hidden layers. The hidden layer usually affects information extraction and function fitting capabilities. The function fitting capability of the DNN can be improved by increasing a quantity of hidden layers of the DNN or increasing a width of each layer. The neural network shown in FIG. 1 includes one input layer, one hidden layer, and one output layer. The input layer has three neurons, the hidden layer has four neurons, and the output layer has two neurons. It may be understood that a quantity of layers in the neural network shown in FIG. 1 and a quantity of neurons included in each layer are merely examples.

Each connecting line between neurons corresponds to one weight (a value of the weight is referred to as a weight value), and these weight values may be updated through training. Each neuron may further correspond to one bias value, and these bias values may be updated through training. Updating the neural network means updating these weight values and bias values. After a structure of the neural network, that is, how an output of a previous neuron is input into a subsequent neuron, the weight values, and the bias values are known, all information of the neural network is known.

It can be learned from FIG. 1 that one neuron may have a plurality of input connecting-lines, and each neuron computes an output based on an input. For example, each neuron performs a weighted summation operation on input values of the neuron, and generates an output through an activation function on a weighted summation result. One neuron may have a plurality of output connecting-lines, and an output of a neuron is used as an input of a next neuron. It should be understood that the input layer has only an output connecting-line, each neuron at the input layer is a value that is input into the neural network, and a value of each neuron is used as inputs of all output connecting-lines. The output layer has only an input connecting-line.

FIG. 2 is a diagram of a structure of a neuron according to an embodiment of this application. As shown in FIG. 2, it is assumed that inputs of the neuron are $x=[x_0, x_1, ..., x_m]$, and weight values corresponding to the inputs are $w=[w_0, w_1, ..., w_m]$. m is a positive integer, and $w_i$ and $x_i$ may be of various possible types such as a decimal, an integer (for example, 0, a positive integer, or a negative integer), or a complex number. $w_i$ is a weight value of $x_i$, and is for weighting $x_i$. A bias value for performing weighted summation on the input values based on the weight values is b. Assuming that an activation function is represented by f(z), an output y of the neuron shown in FIG. 2 is:

$$y = f(\sum_{i=0}^{m} w_i x_i + b) \dots\dots\dots\dots\dots\dots\dots\dots\dots\dots\dots\dots\dots\dots\dots\dots (1\text{-}1)$$

The bias value b may be a decimal, an integer (0, a positive integer, or a negative integer), a complex number, or the like. Activation functions of different neurons in the neural network may be the same or may be different.

Forms of the activation function f(z) may be diversified. Assuming that an activation function of a specific neuron is f(z)=max(0, z), an output of the neuron is $y=f(\sum_{i=0}^{i=m}w_i*x_i+b)=\max(0,\sum_{i=0}^{i=m}w_i*x_i+b)$ . For another example, assuming that an activation function of a specific neuron is f(z)=z, an output of the neuron is $y=f(\sum_{i=0}^{i=m}w_i*x_i+b)=\sum_{i=0}^{i=m}w_i*x_i+b$ . Examples are not enumerated one by one herein. A form of the activation function is not limited in this application.

A loss function may be defined in a training process of the neural network. The loss function describes a disparity or difference between an output of the neural network and target data. A smaller loss function indicates that the output of the neural network better fits the target data. An example in which a mean squared error is used as the loss function is as follows:

$$\text{loss}=(y_{out}-y_{target})^2 \dots\dots\dots\dots\dots\dots\dots\dots\dots (1\text{-}2)$$

$y_{out}$ represents the output of the neural network, $y_{target}$ represents the target data, and minimizing the loss function (namely, loss in the formula (1-2)) means minimizing the difference between values of $y_{out}$ and $y_{target}$. It should be understood that the loss function may alternatively be a cross-entropy loss function, an absolute-value loss function, or the like in addition to the mean squared error loss function. A type of the loss function is not limited in this application. The training process of the neural network is a process of adjusting a part or all of parameters of the neural network such as the quantity of layers or the width of the neural network, a weight value of a neuron, or a parameter in an activation function of a neuron, so that a value of the loss function is less than a threshold or meets a target requirement.

A system architecture in embodiments of this application is described below.

The technical solutions in embodiments of this application may be applied to various communication systems, for example, a long term evolution (long term evolution, LTE) system, 5th generation (5th Generation, 5G) systems such as a new radio access technology (new radio access technology, NR) system, a network integrating a plurality of systems, an internet of things system, an internet of vehicles system, an open radio access network (open radio access network, O-RAN) system, and future communication systems such as a 6th generation (6th Generation, 6G) system.

The technical solutions in embodiments of this application may also be applied to another communication system. For example, in the communication system, a first entity sends configuration information to a second entity, and sends data to the second entity or receives data sent by the second entity; and the second entity receives the configuration information, and sends data to the first entity based on the configuration information or receives data sent by the first entity. When the first entity is a base station, and the second entity is a terminal device (for example, a UE), the base station and the UE may form a communication system. In the communication system, the UE may send uplink data to the base station, and the base station receives the uplink data sent by the UE. The base station may also send configuration information to the UE. Different UEs may also form a communication system. In this case, both the first entity and the second entity are UEs. For example, in the internet of vehicles system, a UE 1 sends configuration information to a UE 2, and receives data sent by the UE 2; and the UE 2 receives the configuration information sent by the UE 1, and sends data to the UE 1.

In a possible implementation, the communication system includes communication devices, and the communication devices may perform wireless communication through an air interface resource. The communication devices may include a network device and a terminal device, and the network device may also be referred to as a base station device. The air interface resource may include at least one of a time domain resource, a frequency domain resource, a code resource, and a spatial resource. In this application, "at least one" may also be described as "one or more", and "a plurality of" may be two, three, four, or more. This is not limited in this application.

It should be understood that the system architecture described in embodiments of this application is intended to describe the technical solutions in embodiments of this application more clearly, and does not constitute a limitation on the technical solutions provided in embodiments of this application. A person of ordinary skill in the art may know that, as the system architecture evolves, the technical solutions provided in embodiments of this application are also applicable to a similar technical problem.

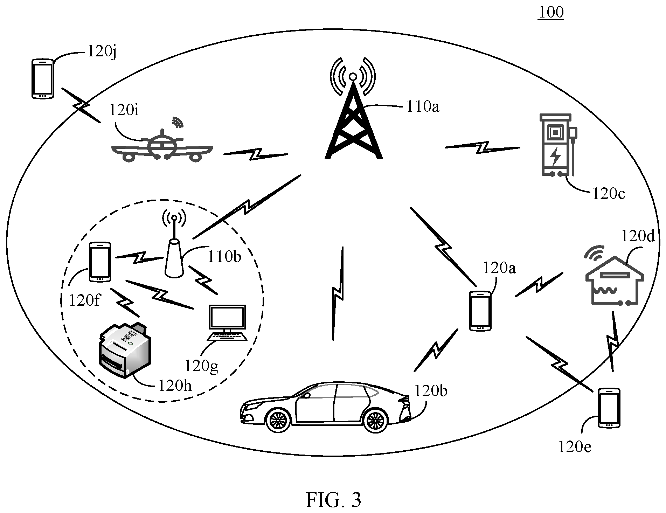

FIG. 3 is a simplified diagram of a communication system according to an embodiment of this application. As shown in FIG. 3, the communication system includes a radio access network 100. The radio access network 100 may be a next generation (for example 6G or higher-generation) radio access network or a conventional (for example, 5G, 4G, 3G, or 2G) radio access network. One or more terminal devices (120a to 120j, collectively referred to as 120) may be interconnected or connected to one or more network devices (110a and 110b, collectively referred to as 110) in the radio access network 100. Optionally, FIG. 3 is merely schematic. The communication system may further include another device, for example, a core network device, a wireless relay device, and/or a wireless backhaul device, that is not shown in FIG. 3.

During actual application, the communication system may include a plurality of network devices (also referred to as access network devices), and may also include a plurality of terminal devices. One network device may serve one or more terminal devices. One terminal device may access one or more network devices. A plurality of network devices may serve one terminal device in a coordinated manner, or one network device may serve one terminal device by using channels of a plurality of frequency bands. A quantity of terminal devices and a quantity of network devices included in the communication system are not limited in this embodiment of this application.

The terminal device may be referred to as a terminal, a user equipment (user equipment, UE), a mobile station (mobile station, MS), a mobile terminal (mobile terminal, MT), or the like. The terminal device may be a device having a wireless transceiver function. The terminal device may be deployed on land, including an indoor or outdoor terminal device or a handheld or vehicle-mounted terminal device; may be deployed on water (for example, on a ship); or may be deployed in air (for example, on an airplane, a balloon, and a satellite). The terminal device may be configured to connect people, things, and machines. The terminal device 120 may be widely used in various scenarios, for example, cellular communication, device-to-device (device-to-device, D2D), vehicle-to-everything (vehicle-to-everything, V2X), peer-to-peer (peer-to-peer, P2P), machine-to-machine (machine-to-machine, M2M), machine type communication (machine type communication, MTC), an internet of things (Internet of Things, IoT), virtual reality (virtual reality, VR), augmented reality (augmented reality, AR), industrial control, autonomous driving, telemedicine, a smart grid, smart furniture, smart office, a smart wearable, smart transportation, a smart city (smart city), a smart home (smart home), an uncrewed aerial vehicle, a robot, remote sensing, passive sensing, positioning, navigation and tracking, and self-delivery and mobility. The terminal device 120 may be a user equipment (UE) in the 3rd generation partnership project (3rd generation partnership project, 3GPP) standard, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, or an industrial device. The terminal device may alternatively be a communication device in a future wireless communication system.

In embodiments of this application, an apparatus configured to implement a function of a terminal may be a terminal, or may be an apparatus, for example, a chip system, a communication module, or a modem, that can support the terminal in implementing the function. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal and the terminal is a UE. A specific technology and a specific device form that are used by the terminal device are not limited in embodiments of this application.

In a possible implementation, the UE may be configured to serve as a base station. For example, the UE may serve as a scheduling entity that provides a sidelink signal between UEs in V2X, D2D, P2P, or the like. As shown in FIG. 3, the cellular phone 120a and the car 120b communicate with each other by using a sidelink signal. The cellular phone 120a communicates with the smart home device 120d without relay of a communication signal by the base station 110a.

In a possible implementation, the UE may alternatively be configured to serve as a relay node. For example, the UE may serve as a relay (relay) device or an integrated access and backhaul (integrated access and backhaul, IAB) node, and is configured to provide a wireless backhaul service for a terminal device.

The network device may be an entity, for example, a base station (base station, BS), that is on a network side and that is configured to transmit or receive a signal. The BS may be a device that is deployed in a radio access network and that can perform wireless communication with a terminal. The base station may be in various forms, such as a macro base station, a micro base station, a relay station, and an access point. For example, the base station in embodiments of this application may be a base station in 5G, a base station in a 6th generation (6th generation, 6G) mobile communication system, an access network device or a module of the access network device in an open radio access network (open radio access network, O-RAN) system, a base station in a future mobile communication system, an access node in a Wi-Fi system, or an evolved NodeB (evolved NodeB, eNB) in LTE. The base station in 5G may also be referred to as a transmission reception point (transmission reception point, TRP) or a next-generation NodeB (next-generation NodeB, gNB). The base station may also be replaced with the following names: for example, a wireless access point, a NodeB (NodeB), a transmitting point (transmitting point, TP), a master eNodeB MeNB, a secondary eNodeB SeNB, a multi-standard radio (Multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or an IAB donor (IAB donor).

The base station (BS) may be fixed or mobile. For example, the base stations 110a and 110b are stationary, and are responsible for wireless transmission and reception from the terminal device 120 in one or more cells. The helicopter or uncrewed aerial vehicle 120i shown in FIG. 3 may be configured to serve as a mobile base station, and one or more cells may move based on a location of the mobile base station 120i. In another example, the helicopter or the unmanned aerial vehicle (120i) may be configured to serve as a terminal device for communicating with the base station 110a.

The network device in embodiments of this application may be an integrated base station, or may be a base station including a central unit (central unit, CU) and/or a distributed unit (distributed unit, DU). The base station including the CU and the DU may also be referred to as a CU-DU split base station. For example, the base station includes a gNB-CU and a gNB-DU. The CU may be further split into a CU control plane (CU control plane, CU-CP) and a CU user plane (CU user plane, CU-CP). For example, the base station includes a gNB-CU-CP, a gNB-CU-UP, and a gNB-DU. Alternatively, the network device in embodiments of this application may be a radio unit (radio unit, RU). Alternatively, the network device in embodiments of this application may be of an open radio access network (O-RAN) architecture or the like. A specific deployment manner of the network device is not limited in embodiments of this application. For example, when the network device is of the O-RAN architecture, the network device described in embodiments of this application may be an access network device, for example, one or a combination of a CU, a DU, or an RU, in an O-RAN, or may be a module or the like in the access network device. In an O-RAN system, the CU may also be referred to as an open (open, O)-CU, the CU-CP may also be referred to as an O-CU-CP, the CU-UP may also be referred to as an O-CU-UP, the DU may also be referred to as an O-DU, and the RU may also be referred to as an O-RU.

In embodiments of this application, an apparatus configured to implement a function of a network device may be a network device, or may be an apparatus, for example, a chip system, a communication module, or a modem, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device and the network device is a base station. The base station may support networks using a same access technology or different access technologies. A specific technology and a specific device form that are used by the network device are not limited in embodiments of this application.

The network device and/or the terminal device may be deployed on land, including an indoor or outdoor device or a handheld or vehicle-mounted device; may be deployed on water; or may be deployed on an airplane, a balloon, and a satellite in air. A scenario of the network device and the terminal device is not limited in embodiments of this application. In addition, the terminal device and the network device may be hardware devices; may be software functions running on special-purpose hardware or software functions running on general-purpose hardware, for example, virtualization functions instantiated on a platform (for example, a cloud platform); or may be entities including special-purpose or general-purpose hardware devices and software functions. The specific forms of the terminal device and the network device are not limited in this application.

In a possible implementation, to support a machine learning function in a wireless network, an AI network element may be introduced to the communication system provided in this application, to implement a part or all of AI-related operations. The AI network element may also be referred to as an AI node, an AI device, an AI entity, an AI module, an AI model, an AI unit, or the like. The AI network element may be built in a specific network element of the communication system, or may be an independently deployed network element. For example, the AI network element may be an AI module built in an access network device, a core network device, a cloud server, or an operation, administration and maintenance (operation, administration and maintenance, OAM), to implement an AI-related function. The OAM may serve as a network management system of the core network device and/or a network management system of the access network device. In a possible implementation, the terminal or a chip built in the terminal may also include an AI entity configured to implement an AI-related function. A specific implementation of the AI network element is not limited in embodiments of this application.

In a possible implementation, the AI network element is deployed in a server or a cloud device of an over the top (over the top, OTT) system. Optionally, the cloud device is located on one or more of a terminal device side, a network device side, or a core network side.

It may be understood that, a quantity of AI nodes is not limited in this application. For example, when there are a plurality of AI nodes, the plurality of AI nodes may be classified based on functions. For example, different AI nodes are responsible for different functions.

It may be further understood that the AI nodes may be independent devices, may be integrated into a same device to implement different functions, may be network elements in a hardware device, may be software functions running on special-purpose hardware, or may be virtualization functions instantiated on a platform (for example, a cloud platform). A specific form of the AI node is not limited in this application.

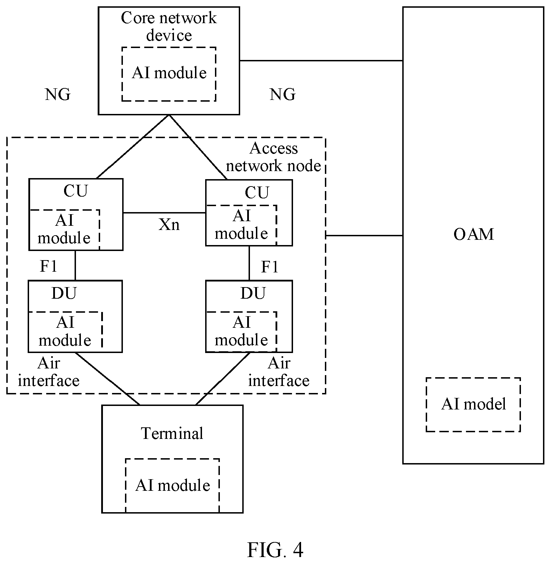

FIG. 4 is a diagram of a possible application architecture of a communication system according to an embodiment of this application. As shown in FIG. 4, network elements in the communication system are connected through interfaces (for example, an NG interface, an Xn interface, or an F 1 interface) or an air interface. One or more AI modules (for clarity, only one AI module is shown in FIG. 4) are disposed in one or more of these network element nodes, for example, a core network device, an access network node (RAN node), a terminal, or an OAM. The access network node may serve as an independent RAN node, or may include a plurality of RAN nodes such as a CU and a DU. One or more AI modules may also be disposed in the CU and/or the DU. Optionally, the CU may be further split into a CU-CP and a CU-UP. One or more AI models are disposed in the CU-CP and/or the CU-UP.

The foregoing AI module may be configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias value in the activation function), an input parameter (for example, a type of the input parameter and/or a dimension of the input parameter), or an output parameter (for example, a type of the output parameter and/or a dimension of the output parameter).

One AI module may have one or more models. One model may obtain one output through inference, where the output includes one or more parameters. Learning processes, training processes, or inference processes of different models may be deployed in different nodes or devices, or may be deployed in a same node or device. This application focuses on a case in which AI modules are disposed in the terminal and the access network node.

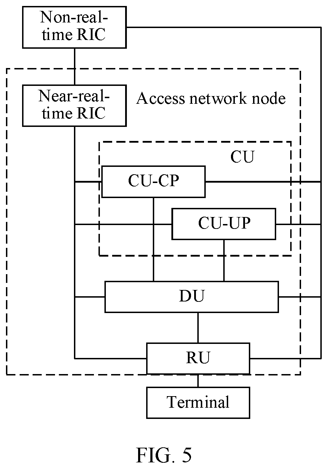

FIG. 5 is another diagram of a possible application architecture of a communication system according to an embodiment of this application. As shown in FIG. 5, the communication system includes a RAN intelligent controller (RAN intelligent controller, RIC). For example, the RIC may be an AI module configured to implement an AI-related function. The RIC may include a near-real-time RIC (near-real-time RIC, near-RT RIC) and a non-real-time RIC (non-real-time RIC, Non-RT RIC).

The near-real-time RIC may be for model training and inference, for example, for training an AI model and performing inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC may also be for model training and inference, for example, for training an AI model and performing inference by using the AI model. The non-real-time RIC may obtain information on the network side and/or the terminal side from a RAN node (for example, the CU, the CU-CP, the CU-UP, the DU, and/or the RU) and/or the terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC may be separately disposed as network elements. Optionally, the near-real-time RIC and/or the non-real-time RIC may alternatively be used as a part of another device. For example, the near-real-time RIC is disposed in a RAN node (for example, the CU and/or the DU), and the non-real-time RIC is disposed in an OAM, a cloud server, a core network device, or another network device.

To support coordinated transmission between a plurality of base stations or in a plurality of frequency bands (to be specific, a plurality of base stations serve one user in a coordinated manner, or one user is served by using channels of a plurality of frequency bands), a UE needs to feed back channel information for the plurality of base stations or the plurality of frequency bands. However, in a frequency division duplex (frequency division duplex, FDD)-based communication system that is widely used currently, an important component of channel information feedback (for example, channel state information (channel state information, CSI) feedback) is a precoding matrix indicator (precoding matrix indicator, PMI), to be specific, quantizing a channel matrix or a precoding matrix by using bits "0" and "1". A PMI design (also referred to as a codebook design) is a basic issue in a mobile communication system. In a conventional codebook design method, a series of precoding matrices and corresponding numbers are predefined (agreed on) in a protocol, and these precoding matrices may also be referred to as codewords. A channel matrix or a precoding matrix may be approximately expressed by using a predefined codeword or a linear combination of a plurality of codewords. Therefore, the UE may feed back, to a base station by using the PMI, one or both of a number corresponding to a codeword and a weighting coefficient, so that the base station recovers the channel matrix or the precoding matrix. For example, the base station may perform weighted summation based on the codeword and the weighting coefficient that are fed back, to recover the channel matrix or the precoding matrix. It can be learned from this that, in existing channel information feedback, a predefined (or agreed) codeword and/or a weighting coefficient are/is fed back to recover a channel matrix or a precoding matrix.

It may be understood that, higher precision of CSI fed back by a UE indicates more abundant information and more accurate channel information recovered by a base station based on the CSI. Therefore, a precoding matrix determined by the base station is more accurate, so that downlink spatial division multiplexing performance is better, a received signal to interference plus noise ratio (signal to interference plus noise ratio, SINR) of the UE is higher, and a system capacity is higher.

However, as a scale of an antenna array in a system increases, a quantity of antenna ports that can be supported increases. A size of a channel matrix is directly proportional to the quantity of antenna ports. In a massive MIMO system, feeding back a channel matrix to a base station by using CSI means huge feedback overheads. Particularly, in a scenario of coordinated transmission between a plurality of base stations or in a plurality of frequency bands, a UE needs to feed back a plurality of groups of codeword numbers and weighting coefficients, to recover channel information between the UE and the plurality of base stations or recover channel information for the plurality of frequency bands. Therefore, feedback overheads for the channel information significantly increase with an increase in a quantity of base stations or a quantity of frequency bands, and data transmission efficiency of an uplink communication link is affected. This is because: A capacity of the uplink is limited, and resources for transmission of uplink data are reduced if more resources are occupied for feeding back the channel information.

A problem of large feedback overheads becomes more severe in scenarios in which a UE feeds back a plurality of pieces of channel information, such as coordinated transmission between a plurality of base stations and in a plurality of frequency bands. To reduce the feedback overheads as much as possible, in a conventional codebook-based channel feedback method, a codebook design needs to be predefined for a channel characteristic in each CSI feedback scenario. For example, a set of codebooks is predefined for channel information feedback for a plurality of stations, and a set of codebooks is predefined for channel information feedback for a plurality of frequencies. With continuous expansion of scenarios, a quantity of predefined codebooks continuously increases. Consequently, the CSI feedback is not sufficiently flexible, and complexity of implementation and protocol design is increased.

Embodiments of this application provide a communication method and apparatus, and a readable storage medium, to improve flexibility of channel information feedback, improve feedback accuracy while reducing feedback overheads, and achieve a unified feedback method, to be specific, a unified feedback method may be designed for scenarios in which a UE feeds back a plurality of pieces of channel information, such as coordinated transmission between a plurality of base stations and in a plurality of frequency bands.

The technical solutions provided in this application are described in detail below.

To clearly describe the technical solutions in this application, this application is described by using a plurality of embodiments. For details, refer to descriptions in the following embodiments. In this application, unless otherwise specified, for same or similar parts of embodiments or implementations, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in different embodiments and the implementations/implementation methods in embodiments may be combined to form a new embodiment, implementation, or implementation method based on an internal logical relationship thereof. The following implementations of this application are not intended to limit the protection scope of this application. It may be understood that a sequence of the following embodiments does not represent a degree of importance.

It should be understood that, in this application, an indication includes a direct indication (also referred to as an explicit indication) and an implicit indication. Directly indicating information A means including the information A. Implicitly indicating information A means indicating the information A by directly indicating information B and based on a correspondence between the information A and the information B. The correspondence between the information A and the information B may be predefined, prestored, pre-burned, or preconfigured.

It should be understood that, in this application, that information C is for determining information D includes that the information D is determined based on the information C only, and also includes that the information D is determined based on the information C and other information. In addition, that the information C is for determining the information D may further include indirect determining. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending the information to the network element B; and that "the network element B receives the information A from the network element A" may be understood as that a source end of the information A or an intermediate network element in a transmission path between the network element B and the source end is the network element A, and may include directly or indirectly receiving the information from the network element A. Information may undergo necessary processing, for example, a format change, between a source end for sending the information and a destination end. However, the destination end may understand valid information from the source end. Similar descriptions in this application may be understood similarly, and details are not described herein.

The method provided in this application may be applied to the network device above, for example, the base station, or may certainly be applied to the terminal device above, for example, the UE. A first communication apparatus in this application may be a network device, for example, a base station, a CU, a DU, an RU, an O-CU, an O-DU, or an O-RU. Correspondingly, a second communication apparatus may be a terminal device, for example, a UE, or a chip in the UE. Alternatively, a first communication apparatus is a terminal device, for example, a UE; and a second communication apparatus is a network device, for example, a base station. Certainly, both a first communication apparatus and a second communication apparatus may be network devices, for example, 110a and 110b in FIG. 3; or may be terminal devices, for example, 120a and 120b in FIG. 3. Specific implementation forms of the first communication apparatus and the second communication apparatus are not limited in this application.

In this application, a module configured to implement an AI model (or an AI function) (referred to as an AI module for short in this application) may be deployed in the first communication apparatus and the second communication apparatus, or may be deployed outside the first communication apparatus and/or the second communication apparatus, for example, in a core network device, a server, or a cloud device. This is not limited in this application.

An encoder (encoder) and a decoder (decoder) in this application may be implemented by AI models. For details, refer to descriptions below, and the details are not described herein again. The encoder may be configured to compress and quantize channel information, and the decoder may be configured to recover corresponding channel information. In a channel information feedback scenario, the encoder may also be referred to as a channel information generation device, and the decoder may also be referred to as a channel information recovery device. The channel information generation device may include a quantizer, and the channel information recovery device may include a dequantizer.

Before the communication method provided in this application is described, a reference signal and channel information in the method are briefly described. The reference signal in the method may be one or more of the following: a channel state information reference signal (channel state information reference signal, CSI-RS), a synchronization signal/physical broadcast channel block (synchronization signal/physical broadcast channel block, SS/PBCH block, SSB), a sounding reference signal (sounding reference signal, SRS), or a demodulation reference signal (demodulation reference signal, DMRS). The CSI-RS, the SSB, and the DMRS may be for channel measurement to obtain downlink channel information, and the SRS and the DMRS may be for channel measurement to obtain uplink channel information. For the uplink channel information, a measured channel may be a physical uplink shared channel (physical uplink shared channel, PUSCH), a physical uplink control channel (physical uplink control channel, PUCCH), or the like. For the downlink channel information, a measured channel may be a physical downlink shared channel (physical downlink shared channel, PDSCH) or a physical downlink control channel (physical downlink control channel, PDCCH).

The channel information in the method may represent a channel. The channel information may be full channel information, for example, a channel response (for example, a complex matrix whose dimension is a quantity of receive antenna ports × a quantity of transmit antenna ports × a quantity of sub-bands), or may be an eigenvector obtained through singular value decomposition (singular value decomposition, SVD) on the channel response or an eigenmatrix including a plurality of eigenvectors. The channel information may be obtained by a communication apparatus by performing channel measurement based on a reference signal.

A term "compression and feedback method" in this application may be understood as a compressed-information feedback method.

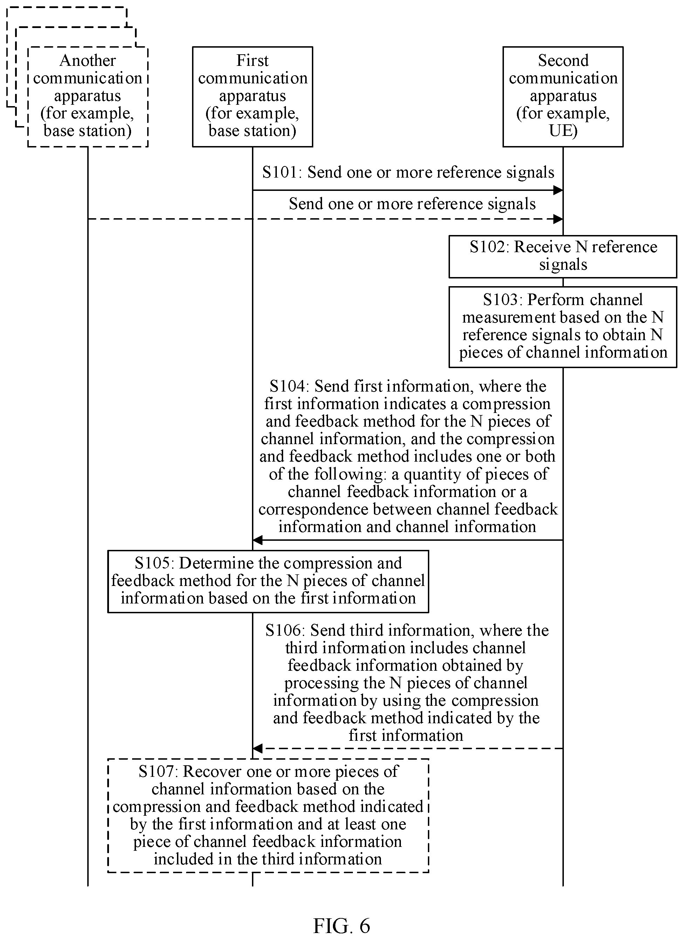

FIG. 6 is a schematic flowchart of a communication method according to an embodiment of this application. The method mainly describes a case in which a UE selects an appropriate compression and feedback method, and notifies a base station of the compression and feedback method by using indication information (namely, first information in this embodiment of this application), so that the base station can recover channel information based on channel feedback information fed back by the UE.

As shown in FIG. 6, the communication method includes but is not limited to the following steps.

S101: A first communication apparatus (for example, the base station or a part of the base station) sends one or more reference signals to a second communication apparatus (for example, the UE).

S102: The second communication apparatus (for example, the UE) receives N reference signals. N is an integer greater than or equal to 2.

S103: The second communication apparatus (for example, the UE) performs channel measurement based on the N reference signals to obtain N pieces of channel information.

In a possible implementation, the communication method provided in this embodiment of this application may be applied to a compression and feedback scenario of a plurality of pieces of channel information. For example, the "plurality of pieces of channel information" may be understood as channel information corresponding to a plurality of base stations in a single frequency band (multi-station single-frequency-band for short), channel information corresponding to a single base station in a plurality of frequency bands (single-station multi-frequency-band for short), channel information corresponding to a plurality of base stations in a plurality of frequency bands (multi-station multi-frequency-band for short), channel information corresponding to a plurality of reference signals of a single base station in a single frequency band, or the like. "Multi-frequency-band" may also be understood as "multi-carrier".

In a possible implementation, the first communication apparatus may send the one or more reference signals, and the second communication apparatus may receive the N reference signals, where all or a part of the N reference signals may be from the first communication apparatus. N is an integer greater than or equal to 2. For example, in the multi-station single-frequency-band scenario, N may represent a quantity of coordinated base stations, and the first communication apparatus may be any base station (or a part of the base station) or a master station (or a part of the master station) that participates in coordinated multi-station transmission. In this case, the first communication apparatus may send one reference signal. In other words, in the multi-station single-frequency-band scenario, a part (for example, one reference signal) of the N reference signals received by the second communication apparatus are from the first communication apparatus, and a remaining part of the N reference signals are from another communication apparatus. For another example, in the single-station multi-frequency-band scenario, N may represent a quantity of frequency bands, and the first communication apparatus may send the N reference signals in N frequency bands, where one reference signal may be sent in one frequency band. In other words, in the single-station multi-frequency-band scenario, all of the N reference signals received by the second communication apparatus are from the first communication apparatus. For another example, in the multi-station multi-frequency-band scenario, assuming that each base station has a same quantity of frequency bands, N may be equal to a product of N1 and N2, where N1 represents a quantity of coordinated base stations, and N2 represents the quantity of frequency bands. The first communication apparatus may be any base station (or a part of the base station) or a master station (or a part of the master station) that participates in coordinated multi-station transmission, and the first communication apparatus may send N2 reference signals in N2 frequency bands, where one reference signal may be sent in one frequency band. In other words, in the multi-station multi-frequency-band scenario, a part (for example, N2 reference signals) of the N reference signals received by the second communication apparatus are from the first communication apparatus, and a remaining part of the N reference signals are from another communication apparatus. It may be understood that, for clarity of this embodiment of this application, the foregoing uses an example in which one reference signal is sent in one frequency band or by one base station. However, during actual application, a plurality of reference signals may alternatively be sent in one frequency band or by one base station. This is not limited in this application.

In another possible implementation, the communication method provided in this embodiment of this application may alternatively be applied to a compression and feedback scenario of channel information for a single base station in a single frequency band (single-station single-frequency-band for short). In the single-station single-frequency-band scenario, the first communication apparatus may send the N reference signals (in one frequency band), and the N reference signals may be sent at different moments. Correspondingly, the second communication apparatus may receive the N reference signals.

In a possible implementation, after receiving a reference signal, the second communication apparatus may perform channel measurement based on the reference signal to obtain channel information. For example, after receiving one reference signal, the second communication apparatus may perform channel measurement once; or after receiving a plurality of reference signals, the second communication apparatus may respectively perform channel measurement based on the plurality of reference signals. One piece of channel information may be obtained by performing channel measurement based on one reference signal. In this case, the N pieces of channel information may be obtained by separately performing channel measurement based on the N reference signals.

In a possible implementation, before the first communication apparatus sends the reference signal, that is, before step S101, the first communication apparatus may configure a reference signal resource (RS resource) for the second communication apparatus. For example, the first communication apparatus sends resource configuration information, where the resource configuration information may include one or more reference signal resources. One reference signal resource may be for carrying one reference signal. In other words, a quantity of reference signals sent by the first communication apparatus may be equal to a quantity of reference signal resources configured by the first communication apparatus. In this case, the second communication apparatus may determine N reference signal resources based on the resource configuration information sent by the first communication apparatus or based on resource configuration information sent by the first communication apparatus and the another communication apparatus. The N reference signal resources may belong to one or more reference signal resource sets (RS resource sets). The second communication apparatus may receive (or obtain) the N reference signals on the N reference signal resources, and then perform channel measurement based on the N reference signals to obtain the N pieces of channel information. Therefore, one piece of channel information may correspond to one reference signal resource, for example, correspond to one reference signal resource identifier, and the N pieces of channel information correspond to the N reference signal resources (resource identifiers).

For example, the reference signal is a CSI-RS. In a multi-station scenario (including the multi-station single-frequency-band scenario and the multi-station multi-frequency-band scenario), one or more CSI-RS resources corresponding to a base station 1 are configured, and one or more CSI-RS resources corresponding to a base station 2 are configured, that is, N CSI-RS resources corresponding to the base station 1 and the base station 2 are configured in total, where the N CSI-RS resources belong to one or more CSI-RS resource sets. The foregoing configuration may be completed by a single base station, for example, the base station 1; or may be completed by a plurality of base stations, for example, the base station 1 and the base station 2. The base station 1 and the base station 2 respectively send CSI-RSs on the corresponding CSI-RS resources. The UE receives the CSI-RSs on the N CSI-RS resources, and performs channel measurement to obtain the channel information. In a single-station scenario (including the single-station single-frequency-band scenario and the single-station multi-frequency-band scenario), a difference from the foregoing multi-station scenario includes: N CSI-RS resources are configured by one base station, and the base station sends the N reference signals on the N CSI-RS resources. Details are not described in this embodiment of this application.

S104: The second communication apparatus (for example, the UE) sends the first information to the first communication apparatus (for example, the base station or a part of the base station), where the first information indicates the compression and feedback method for the N pieces of channel information, and the compression and feedback method includes one or both of the following: a quantity of pieces of channel feedback information or a correspondence between channel feedback information and channel information. One piece of channel information corresponds to one or more pieces of channel feedback information.

Correspondingly, the first communication apparatus (for example, the base station or the part of the base station) receives the first information.

S105: The first communication apparatus (for example, the base station or a part of the base station) determines the compression and feedback method for the N pieces of channel information based on the first information.

In a possible implementation, after obtaining the N pieces of channel information, the second communication apparatus may compute a correlation between at least two pieces of channel information in the N pieces of channel information. For example, the second communication apparatus may compute a correlation between every two pieces of channel information in the N pieces of channel information, to determine a similarity degree between N channels corresponding to the N pieces of channel information. For example, if channel information is an eigenvector obtained through singular value decomposition (SVD) on a channel response, an inner product between eigenvectors may represent a correlation between channel information. For another example, if channel information is a channel response (represented in a form of a matrix), the channel response may be converted into a vector, and an inner product between vectors represents a correlation between channel information. For example, a larger inner product value between vectors indicates a higher correlation between channel information, and also indicates a higher similarity degree between channels.

In a possible implementation, the second communication apparatus may determine the compression and feedback method for the N pieces of channel information based on the correlation between the at least two pieces of channel information in the N pieces of channel information. For example, several compression and feedback methods may be predefined. The second communication apparatus selects, from the predefined compression and feedback methods based on the correlation between the N pieces of channel information, one compression and feedback method as the compression and feedback method for the N pieces of channel information. The compression and feedback method may be represented by the quantity of pieces of channel feedback information and the correspondence between the channel feedback information and the channel information.

(a) Predefined compression and feedback method 1: One piece of channel information corresponds to one piece of channel feedback information, or one piece of channel feedback information represents content of one piece of channel information. In this case, the N pieces of channel information correspond to N pieces of channel feedback information. In other words, one piece of channel feedback information may be obtained by processing (for example, compressing) one piece of channel information by using an encoder (encoder). The encoder may be implemented by an AI model.

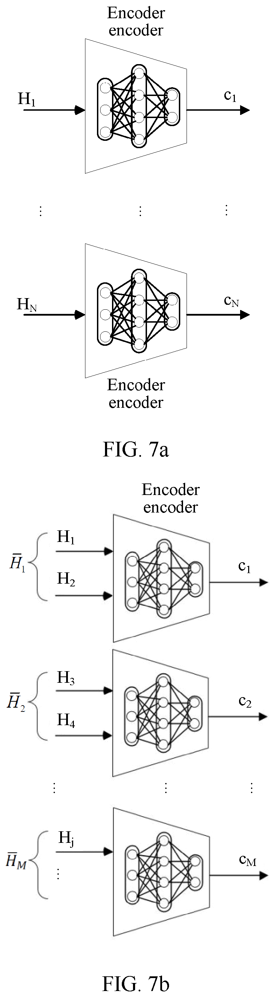

FIG. 7a is a diagram of a compression and feedback method for channel information according to this embodiment of this application. N pieces of channel information are denoted as $\{H_1, H_2, ..., H_N\}$, and N pieces of channel feedback information may be obtained by compressing the N pieces of channel information, and are denoted as $\{c_1, c_2, ..., c_N\}$, where channel feedback information $c_i$ represents channel information $H_i$. As shown in FIG. 7a, the N pieces of channel information are respectively input into N encoders for processing, to obtain the N corresponding pieces of channel feedback information. For example, the channel information $H_i$ is input into an encoder for processing, to obtain the channel feedback information $c_i$. The N encoders may be N times of implementation of a same AI model; the N encoders are N different AI models; or the N encoders are P (P is less than N) AI models, where a part of the encoders use a same AI model. This is not limited in this embodiment of this application.

It may be understood that, in the compression and feedback method 1, the N pieces of channel feedback information respectively represent the N pieces of channel information, and compression processes may be performed on the N pieces of channel information in parallel (as shown in FIG. 7a). This achieves low complexity and high parallelism, and is applicable to a scenario in which the correlation between the N pieces of channel information is low. In a possible implementation, when the correlation between every two pieces of channel information in the N pieces of channel information obtained by the second communication apparatus is less than a preset threshold, the second communication apparatus determines that the compression and feedback method for the N pieces of channel information is the predefined compression and feedback method 1.

It may be understood that the AI model has a strong nonlinear feature extraction capability. Compared with a conventional channel information compression and feedback solution, this channel information compression and feedback solution using the AI model may enable feedback of a same scale to include more channel information, to reduce an information loss in channel compression and feedback, and improve channel recovery accuracy on a base station side. Alternatively, compared with a conventional channel information feedback solution, this channel information compression and feedback solution using the AI model may use a smaller quantity of pieces of feedback information to represent channel information of a same scale, to further reduce feedback overheads. Therefore, in this embodiment of this application, the channel information is compressed by using the AI model, so that the feedback overheads can be reduced, and feedback accuracy can be improved.

(b) Predefined compression and feedback method 2: One piece of channel information corresponds to one piece of channel feedback information, but one piece of channel feedback information represents content of one or more pieces of channel information. For example, the N pieces of channel information correspond to M pieces of channel feedback information, and one piece of channel feedback information represents content of one channel information subset. In other words, one piece of channel feedback information may be obtained by processing (for example, compressing) one channel information subset by using an encoder (encoder). The encoder may be implemented by an AI model. One channel information subset includes one or more pieces of channel information in the N pieces of channel information, and a union set of M channel information subsets is the N pieces of channel information. An intersection set of any two channel information subsets in the M channel information subsets is an empty set. M is a positive integer less than N.

In a possible implementation, the channel information subset may be determined based on the correlation between the channel information. For example, the N pieces of channel information obtained by the second communication apparatus may be classified into the M channel information subsets by using a clustering algorithm (for example, a k-means clustering algorithm (k-means clustering algorithm) or a density-based spatial clustering of applications with noise (density-based spatial clustering of applications with noise, DBSCAN)), where a distance between sample objects in the clustering algorithm is determined based on a correlation between channel information (for example, an inner product between vectors). For example, the distance between the sample objects is 1-Correlation between the channel information or exp(-Correlation between channels).

In another possible implementation, the channel information subset may alternatively be determined based on the reference signal resource set. As described above, if one piece of channel information corresponds to one reference signal resource, the N pieces of channel information correspond to the N reference signal resources, and the N reference signal resources may belong to a plurality of reference signal resource sets. Therefore, channel information corresponding to reference signal resources that belong to a same reference signal resource set may be classified into one channel information subset. In other words, reference signal resources respectively corresponding to all channel information in one channel information subset all belong to a same reference signal resource set. Certainly, if the N reference signal resources belong to one reference signal resource set, the channel information subset may be determined based on the correlation between the channel information instead of being determined based on the reference signal resource set.

FIG. 7b is another diagram of a compression and feedback method for channel information according to this embodiment of this application. N pieces of channel information are denoted as $\{H_1, H_2, ..., H_N\}$, and M pieces of channel feedback information may be obtained by compressing the N pieces of channel information, and are denoted as $\{c_1, c_2, ..., c_M\}$, where channel feedback information $c_i$ represents a channel information subset $\overline{H}_i$ a union set $\bigcup_{i=1}^{M} \overline{H}_i$ of M channel information subsets=$\{H_1, H_2, ..., H_N\}$, and an intersection set of any two channel information subsets $\overline{H}_i$, and $\overline{H}_j$, in the M channel information subsets is an empty set. As shown in FIG. 7b, the M channel information subsets are respectively input into M encoders for processing, to obtain the M corresponding pieces of channel feedback information. For example, the channel information subset $\overline{H}_i$, is input into an encoder for processing, to obtain the channel feedback information $c_i$. The M encoders may be M times of implementation of a same AI model; the M encoders are M different AI models; or the M encoders are P (P is less than M) AI models, where a part of the encoders use a same AI model. This is not limited in this embodiment of this application. As shown in FIG. 7b, it is assumed that a channel information subset $\overline{H}_1$ includes the channel information $H_1$ and $H_2$, a channel information subset $\overline{H}_2$ includes the channel information $H_3$ and $H_4$, the channel information $H_1$ and $H_2$ are input into an encoder for processing to obtain the corresponding channel feedback information $c_1$, and the channel information $H_3$ and $H_4$ are input into another encoder for processing to obtain the corresponding channel feedback information $c_2$.

It may be understood that, in the compression and feedback method 2, a plurality of pieces of channel information are jointly compressed into one piece of channel feedback information (as shown in FIG. 7b), so that a similarity between the plurality of pieces of channel information can be fully used, and a compression degree is high. This is applicable to a scenario in which the correlation between the N pieces of channel information is high. In a possible implementation, when a correlation between at least T1 (T1 is less than or equal to N) channel information pairs in the correlation between every two pieces of channel information in the N pieces of channel information obtained by the second communication apparatus is greater than a threshold, and a correlation between two pieces of channel information that are respectively selected from any two channel information subsets in the M channel information subsets obtained through clustering is less than a threshold, the second communication apparatus determines that the compression and feedback method for the N pieces of channel information is the predefined compression and feedback method 2.

(c) Predefined compression and feedback method 3: One piece of channel information corresponds to one or more pieces of channel feedback information. For example, it is assumed that the N pieces of channel information may be classified into M channel information subsets, the N pieces of channel information correspond to M+K pieces of channel feedback information, and one piece of channel feedback information in the K pieces of channel feedback information represents common information of at least two channel information subsets in the M channel information subsets. In other words, one piece of channel feedback information $s_j$ may be obtained by processing (for example, performing common-feature extraction and compression on) at least two channel information subsets by using a first encoder (encoder). The first encoder may be implemented by an AI model. One piece of channel feedback information in the M pieces of channel feedback information represents specific information of one channel information subset. In other words, one piece of channel feedback information $c_i$ may be obtained by processing (for example, performing specific-feature extraction and compression on), by using a second encoder (encoder), one channel information subset and common information corresponding to the channel information subset. The second encoder may be implemented by an AI model. One channel information subset includes one or more pieces of channel information in the N pieces of channel information, a union set of the M channel information subsets is the N pieces of channel information, and an intersection set of any two channel information subsets in the M channel information subsets may be an empty set, or may not be an empty set. The first encoder and the second encoder are different. M and K are both positive integers less than N, and K is less than M.

In a possible implementation, the channel information subset may be determined based on the correlation between the channel information. For details, refer to the foregoing descriptions, and the details are not described herein again. In another possible implementation, the channel information subset may alternatively be determined based on the reference signal resource set. For details, refer to the foregoing descriptions, and the details are not described herein again.

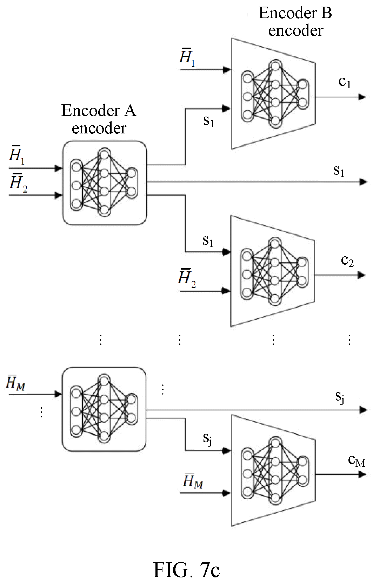

FIG. 7c is still another diagram of a compression and feedback method for channel information according to this embodiment of this application. N pieces of channel information are denoted as $\{H_1, H_2, ..., H_N\}$, the N pieces of channel information are classified into M channel information subsets, a union set $\bigcup_{i=1}^{M} \overline{H_i}$ of the M channel information subsets= $\{H_1, H_2, ..., H_N\}$, and an intersection set of any two channel information subsets in the M channel information subsets is an empty set. As shown in FIG. 7c, the M channel information subsets are input into K first encoders for processing (for example, common-feature extraction and compression), to obtain K pieces of channel feedback information that are denoted as $\{s_1, s_2, ..., s_K\}$. An input of one first encoder is at least two channel information subsets. The M channel information subsets and common information (namely, $\{s_1, s_2, ..., s_k\}$) corresponding to the M channel information subsets are respectively input into M second encoders for processing (for example, specific-feature extraction and compression), to obtain M corresponding pieces of channel feedback information that are denoted as $\{c_1, c_2, ..., c_M\}$. An input of one second encoder is one channel information subset and common information corresponding to the channel information subset. The first encoder and the second encoder are implemented by different AI models. The K first encoders may be K times of implementation of a same AI model; the K first encoders are K different AI models; or the K first encoders are Q (Q is less than K) AI models, where a part of the first encoders use a same AI model. This is not limited in this embodiment of this application. Similarly, the M second encoders may be M times of implementation of a same AI model; the M second encoders are M different AI models; or the M second encoders are P (P is less than M) AI models, where a part of the second encoders use a same AI model. This is not limited in this embodiment of this application.

As shown in FIG. 7c, a channel information subset $\overline{H_1}$ and a channel information subset $\overline{H_2}$ are input into an encoder A for common-feature extraction and compression to obtain the channel feedback information $s_1$, the channel information subset $\overline{H_1}$ and corresponding common information (namely, the channel feedback information $s_1$) are input into an encoder B together for processing to obtain the corresponding channel feedback information $c_1$, and the channel information subset $\overline{H_2}$ and corresponding common information (namely, the channel feedback information $s_1$) are input to an encoder B together for processing to obtain the corresponding channel feedback information $c_2$. Herein, the channel feedback information $s_1$ may represent the common information of the channel information subset $\overline{H_1}$ and the channel information subset $\overline{H_2}$, the channel feedback information $c_1$ may represent specific information of the channel information subset $\overline{H_1}$, and the channel feedback information $c_2$ may represent specific information of the channel information subset $\overline{H_2}$.

It may be understood that, in the compression and feedback method 3, common features of a plurality of pieces of channel information are jointly compressed into one piece of channel feedback information (as shown in FIG. 7c), so that a similarity between the plurality of pieces of channel information can be fully used, a compression degree is high, and complexity is lower than that of the compression and feedback method 2. This is applicable to a scenario in which the correlation between the N pieces of channel information is moderate. In a possible implementation, when a correlation between at least T2 (T2 is less than or equal to N) channel information pairs in the correlation between every two pieces of channel information in the N pieces of channel information obtained by the second communication apparatus is greater than a threshold, and a correlation between two pieces of channel information that are respectively selected from two channel information subsets obtained through clustering is greater than a threshold, the second communication apparatus determines that the compression and feedback method for the N pieces of channel information is the predefined compression and feedback method 3. T2 may be the same as or different from T1. This is not limited in this embodiment of this application.

It may be understood that, it can be learned from the foregoing three compression and feedback methods that, in this embodiment of this application, the appropriate compression and feedback method can be flexibly selected based on a similarity degree between the N pieces of channel information, to compress the N pieces of channel information with complexity as low as possible and a compression ratio as high as possible.

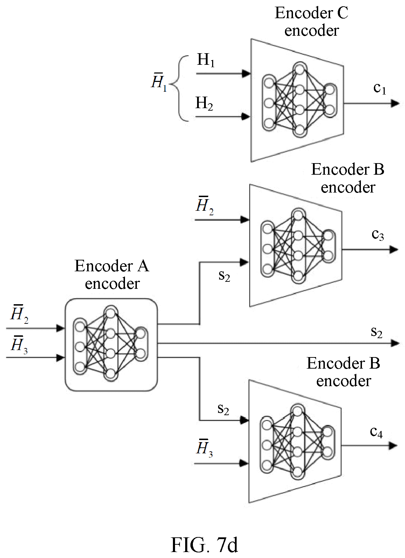

In a possible implementation, more compression and feedback methods, for example, a combination of at least two of the foregoing three compression and feedback methods, may be predefined in this embodiment of this application. Details are not described herein one by one. FIG. 7d is yet another diagram of a compression and feedback method for channel information according to this embodiment of this application. FIG. 7d shows a combination of the compression and feedback method 2 and the compression and feedback method 3. N pieces of channel information are denoted as $\{H_1, H_2, ..., H_N\}$, the N pieces of channel information are classified into M channel information subsets, each channel information subset includes one or more pieces of channel information, and a union set $\bigcup_{i=1}^{M} \overline{H}_i$ of the M channel information subsets=$\{H_1, H_2, ..., H_N\}$. As shown in FIG. 7d, it is assumed that M is equal to 3, a channel information subset $\overline{H}_1$ includes the channel information $H_1$ and $H_2$, the channel information subset $\overline{H}_1$ is input into an encoder C for processing to obtain corresponding channel feedback information $c_1$, a channel information subset $\overline{H}_2$ and a channel information subset $\overline{H}_3$ are input into an encoder A for common-feature extraction and compression to obtain channel feedback information $s_2$, the channel information subset $\overline{H}_2$ and corresponding common information (namely, the channel feedback information $s_2$) are input into an encoder B together for processing to obtain corresponding channel feedback information $c_3$, and the channel information subset $\overline{H}_3$ and corresponding common information (namely, the channel feedback information $s_2$) are input into an encoder B together for processing to obtain corresponding channel feedback information $c_4$. Herein, the channel feedback information $c_1$ may represent all content of the channel information subset $\overline{H}_1$, the channel feedback information $s_2$ may represent the common information of the channel information subset $\overline{H}_2$ and the channel information subset $\overline{H}_3$, the channel feedback information $c_3$ may represent specific information of the channel information subset $\overline{H}_2$, and the channel feedback information $c_4$ may represent specific information of the channel information subset $\overline{H}_3$. The encoder A, the encoder B, and the encoder C may be different from each other.

In a possible implementation, after determining the compression and feedback method for the N pieces of channel information, the second communication apparatus may send the first information to the first communication apparatus, where the first information may indicate the compression and feedback method for the N pieces of channel information.

In a possible implementation, a unique identifier may be set for a predefined compression and feedback method, and an identifier of the compression and feedback method is carried in the first information, so that the compression and feedback method for the N pieces of channel information is determined. A correspondence between a compression and feedback method and an identifier may be predefined, preconfigured, determined through negotiation, or the like. This is not limited in this embodiment of this application, provided that a receiving party and a sending party reach an agreement. In this case, after receiving the first information, the first communication apparatus may learn of the compression and feedback method for the N pieces of channel information based on the identifier carried in the first information and the correspondence between the compression and feedback method and the identifier, to help subsequently recover channel information based on the compression and feedback method and channel feedback information sent by the second communication apparatus.

For example, it is assumed that an identifier of the compression and feedback method shown in FIG. 7a is ID1, an identifier of the compression and feedback method shown in FIG. 7b is ID2, an identifier of the compression and feedback method shown in FIG. 7c is ID3, and an identifier of the compression and feedback method shown in FIG. 7d is ID4. Assuming that the first information carries ID4, it indicates that the compression and feedback method is shown in FIG. 7d, where the channel feedback information $c_1$ may represent all the content of the channel information subset $\overline{H}_1$ (including the channel information $H_1$ and $H_2$), the channel feedback information $s_2$ may represent the common information of the channel information subset $\overline{H}_2$ and the channel information subset $\overline{H}_3$, the channel feedback information $c_3$ may represent the specific information of the channel information subset $\overline{H}_2$, and the channel feedback information $c_4$ may represent the specific information of the channel information subset $\overline{H}_3$. Therefore, the UE uses four encoders to generate four pieces of channel feedback information.

In another possible implementation, the first information includes one or both of the following: the quantity of pieces of channel feedback information corresponding to the N pieces of channel information or a correspondence between each piece of channel feedback information and one or more pieces of channel information in the N pieces of channel information. It may be understood that because the compression and feedback method may be represented by the quantity of pieces of channel feedback information and the correspondence between each piece of channel feedback information and the channel information, content representing the compression and feedback method may be carried in the first information, so that the compression and feedback method for the N pieces of channel information is determined. It may be further understood that, when a part of content (for example, the quantity of pieces of channel feedback information) representing the compression and feedback method is predefined, the first information may carry the other part of content (for example, the correspondence between each piece of channel feedback information and the one or more pieces of channel information in the N pieces of channel information) representing the compression and feedback method. In this case, after receiving the first information, the first communication apparatus may determine the compression and feedback method for the N pieces of channel information based on the content carried in the first information and the predefined content representing the compression and feedback method, to help subsequently recover channel information based on the compression and feedback method and channel feedback information sent by the second communication apparatus.

For example, N is equal to 4, and the first information indicates that the quantity of pieces of channel feedback information corresponding to the four pieces of channel information is 6, where a $1^{st}$ piece of channel feedback information $c_1$ corresponds to channel information $H_1$, and represents specific information of the channel information $H_1$; a $2^{nd}$ piece of channel feedback information $c_2$ corresponds to channel information $H_2$, and represents specific information of the channel information $H_2$; a $3^{rd}$ piece of channel feedback information $s_3$ corresponds to the channel information $H_1$ and $H_2$, and represents common information of the channel information $H_1$ and the channel information $H_2$; a $4^{th}$ piece of channel feedback information $c_4$ corresponds to channel information $H_3$, and represents specific information of the channel information $H_3$; a $5^{th}$ piece of channel feedback information $c_5$ corresponds to channel information $H_4$, and represents specific information of the channel information $H_4$; and a $6^{th}$ piece of channel feedback information $s_6$ corresponds to the channel information $H_3$ and $H_4$, and represents common information of the channel information $H_3$ and the channel information $H_4$. Therefore, the UE may determine six encoders that are respectively for generating the six pieces of feedback information. An encoder 1 is for generating $c_1$, and an input of the encoder 1 includes the channel information $H_1$ and the channel feedback information $s_3$. An encoder 2 is for generating $c_2$, and an input of the encoder 2 includes the channel information $H_2$ and the channel feedback information $s_3$. An encoder 3 is for generating $s_3$, and an input of the encoder 3 includes the channel information $H_1$ and $H_2$. An encoder 4 is for generating $c_4$, and an input of the encoder 4 includes the channel information $H_3$ and the channel feedback information $s_6$. An encoder 5 is for generating $c_5$, and an input of the encoder 5 includes the channel information $H_4$ and the channel feedback information $s_6$. An encoder 6 is for generating $s_6$, and an input of the encoder 6 includes the channel information $H_3$ and $H_4$.

In a possible implementation, a 0/1 matrix may indicate the quantity of pieces of channel feedback information and the correspondence between the channel feedback information and the N pieces of channel information. For an example of the previous paragraph, the 0/1 matrix may be:

$$\begin{bmatrix} 1 & 0 & 1 & 0 & 0 & 0 \\ 0 & 1 & 1 & 0 & 0 & 0 \\ 0 & 0 & 0 & 1 & 0 & 1 \\ 0 & 0 & 0 & 0 & 1 & 1 \end{bmatrix}.$$

In the 0/1 matrix, a row represents channel information, and a column represents channel feedback information. If an element in an $i^{th}$ row and a $j^{th}$ column is 1, it indicates that a $j^{th}$ piece of channel feedback information corresponds to an $i^{th}$ piece of channel information, that is, the $j^{th}$ piece of channel feedback information is obtained based on the $i^{th}$ piece of channel information, in other words, the $j^{th}$ piece of channel feedback information includes all or a part of features of the $i^{th}$ piece of channel information. If an element in an $i^{th}$ row and a $j^{th}$ column is 0, it indicates that there is no correspondence between a $j^{th}$ piece of channel feedback information and an $i^{th}$ piece of channel information, in other words, the $j^{th}$ piece of channel feedback information does not include any feature of the $i^{th}$ piece of channel information.

In another possible implementation, a 0/1 matrix may indicate the quantity of pieces of channel feedback information and the correspondence between the channel feedback information and the N pieces of channel information. The 0/1 matrix in the previous paragraph may be represented as Table 1.

Table 1

| Channel feedback information | Channel information |
|---|---|
| $c_1$ | $H_1$ |
| $c_2$ | $H_1$ |
| $s_3$ | $H_1$ and $H_2$ |
| $c_4$ | $H_3$ |

(continued)

| Channel feedback information | Channel information |
|---|---|
| $c_5$ | $H_4$ |
| S6 | $H_3$ and $H_4$ |

One row in Table 1 represents one piece of channel feedback information and channel information corresponding to the piece of channel feedback information, and a quantity of rows in Table 1 is the quantity of pieces of channel feedback information. In Table 1, a 1st column represents channel feedback information, and a 2nd column represents channel information corresponding to the channel feedback information in the 1st column.

It may be understood that a specific representation form of the first information is not limited in this application, in other words, a signaling form of the first information is not limited in this application. Any signaling indication manner that can represent the content of the first information falls within the protection scope of this application. In a possible implementation, the first communication apparatus and the second communication apparatus may agree on the quantity of pieces of channel feedback information and the correspondence between the channel feedback information and the channel information by using the indication of the first information. The first communication apparatus and the second communication apparatus may further agree on an AI model to be used by an encoder for generating each piece of channel feedback information. In an implementation, the first communication apparatus determines an identifier of the AI model to be used by the encoder for generating each piece of channel feedback information, and indicates the identifier to the second communication apparatus. In another implementation, the second communication apparatus determines an identifier of the AI model to be used by the encoder for generating each piece of channel feedback information, and indicates the identifier to the first communication apparatus. In still another implementation, the first communication apparatus indicates a candidate AI model set, and the second communication apparatus determines, from the candidate AI model set, an identifier of the AI model to be used by the encoder for generating each piece of channel feedback information, and indicates the identifier to the first communication apparatus. It may be understood that in a same compression and feedback method, a plurality of encoders may use a same AI model. Certainly, the plurality of encoders may alternatively use different AI models, or some of the plurality of encoders reuse a same AI model. This is not limited in this embodiment of this application. In different compression and feedback methods, some encoders may also use a same AI model. This is not limited in this embodiment of this application.

This embodiment of this application provides a plurality of compression and feedback methods of the channel information, and the first information indicates a specific compression and feedback method to be used, so that flexibility of channel information feedback can be improved. In this embodiment of this application, in the compression and feedback method, the channel information is compressed by using the AI model, so that the feedback accuracy can be improved while the feedback overheads are reduced. In addition, in this embodiment of this application, there is no need to separately design compression and feedback methods in the multi-station scenario and the multi-frequency-band scenario, so that a unified channel compression and feedback method can be used.

In a possible implementation, after step S104, the communication method shown in FIG. 6 may further include the following steps.

S106: The second communication apparatus (for example, the UE) sends third information to the first communication apparatus (for example, the base station or a part of the base station), where the third information includes channel feedback information obtained by processing the N pieces of channel information by using the compression and feedback method indicated by the first information.

Correspondingly, the first communication apparatus (for example, the base station or the part of the base station) receives the third information.

S107: The first communication apparatus (for example, the base station or a part of the base station) recovers one or more pieces of channel information based on the compression and feedback method indicated by the first information and at least one piece of channel feedback information included in the third information.

In a possible implementation, after step S104, the second communication apparatus may process (for example, compress), by using the compression and feedback method indicated by the first information in step S104, the N pieces of channel information obtained in step S103, to obtain a plurality of pieces of channel feedback information. Then, the second communication apparatus may feed back the plurality of pieces of channel feedback information to the first communication apparatus. For example, the second communication apparatus sends the third information to the first communication apparatus, where the third information includes the plurality of pieces of channel feedback information. It may be understood that, in the multi-station scenario (for example, the multi-station multi-frequency-band scenario or the multi-station single-frequency-band scenario), the second communication apparatus may send the third information to a plurality of first communication apparatuses that participate in the coordinated multi-station transmission (the plurality of first communication apparatuses herein may be all or a part of first communication apparatuses that participate in the coordinated multi-station transmission), so that each first communication apparatus recovers channel information for the first communication apparatus based on the third information. Certainly, the second communication apparatus may alternatively send the third information to a specific first communication apparatus (for example, the master station or the any base station) that participates in the coordinated multi-station transmission, so that the first communication apparatus recovers one or more pieces of channel information based on the third information.

For example, the third information may be a CSI report (CSI report), and the second communication apparatus may feed back the plurality of pieces of channel feedback information to the first communication apparatus by using one or more CSI reports.

It may be understood that a quantity of pieces of channel feedback information obtained by processing the N pieces of channel information by using the compression and feedback method indicated by the first information is related to the compression and feedback method. For example, if the compression and feedback method indicated by the first information is the compression and feedback method 1, N pieces of compression and feedback information are obtained by processing the N pieces of channel information by using the compression and feedback method 1. If the compression and feedback method indicated by the first information is the compression and feedback method 2, M (M is less than N) pieces of compression and feedback information are obtained by processing the N pieces of channel information by using the compression and feedback method 2. If the compression and feedback method indicated by the first information is the compression and feedback method 3, M+K pieces of compression and feedback information are obtained by processing the N pieces of channel information by using the compression and feedback method 3.

In a possible implementation, after obtaining the third information, the first communication apparatus may recover the one or more pieces of channel information based on the compression and feedback method indicated by the first information and the at least one piece of channel feedback information included in the third information. In the single-station multi-frequency-band scenario, the first communication apparatus may recover N pieces of channel information based on the compression and feedback method indicated by the first information and all the pieces of channel feedback information included in the third information. In the multi-station single-frequency-band scenario, the first communication apparatus may recover one piece of channel information for the first communication apparatus based on the compression and feedback method indicated by the first information and a part of the pieces of channel feedback information included in the third information. In the multi-station multi-frequency-band scenario, the first communication apparatus (assuming that the first communication apparatus includes N2 frequency bands) may recover N2 pieces of channel information for the first communication apparatus based on the compression and feedback method indicated by the first information and a part of the pieces of channel feedback information included in the third information. It may be understood that, to enable the first communication apparatus to learn which piece of channel feedback information is related to the first communication apparatus, in addition to including the plurality of pieces of channel feedback information, the third information may further include a reference signal resource indicator (for example, a reference signal resource ID or information about an antenna port or a port group for a reference signal) corresponding to each piece of channel feedback information. In this case, after receiving the third information, the first communication apparatus may determine, based on the reference signal resource indicator (for example, the reference signal resource ID or the information about the antenna port or the port group for the reference signal) corresponding to each piece of channel feedback information, the piece of channel feedback information related to the first communication apparatus, and then recover the one or more pieces of channel information for the first communication apparatus based on the compression and feedback method indicated by the first information and the one or more pieces of channel feedback information in the third information that are related to the first communication apparatus. Because one piece of channel feedback information corresponds to one or more pieces of channel information, and one piece of channel information corresponds to one reference signal resource, one piece of channel feedback information may correspond to one or more reference signal resources. The reference signal resource may be configured by the first communication apparatus. Therefore, the first communication apparatus can learn which reference signal resource belongs to the first communication apparatus. Correspondingly, channel feedback information corresponding to the reference signal resource is related to the first communication apparatus, and is used by the first communication apparatus to recover the channel information.

In a possible implementation, a process of recovering the channel information by the first communication apparatus is an inverse process of compressing the channel information by the second communication apparatus. The following uses different cases to describe manners of recovering the channel information based on different compression and feedback methods. It may be understood that the channel information obtained by the second communication apparatus in step S103 and the channel information recovered by the first communication apparatus in step S107 are not completely the same, but are similar. When accuracy of the channel feedback information is higher, the channel information recovered in step S107 is more approximate to the channel information obtained in step S103. For ease of description, in the following, the channel information obtained in step S103 is denoted as $H_i$, and the channel information recovered in step S107 is denoted as $H_i'$.

(1) The compression and feedback method indicated by the first information is the compression and feedback method 1.

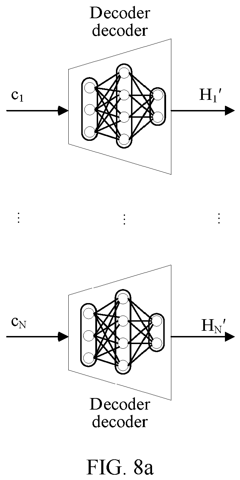

FIG. 8a is a diagram of channel information recovery according to this embodiment of this application. FIG. 8a may be understood as an inverse process of FIG. 7a, and is a diagram of channel information recovery when the channel information is compressed by using the compression and feedback method 1. When the compression and feedback method indicated by the first information is the compression and feedback method 1, the third information includes the N pieces of channel feedback information that are denoted as $\{c_1, c_2, ..., c_N\}$, where the channel feedback information $c_i$ represents the channel information $H_i$. As shown in FIG. 8a, the N pieces of channel feedback information are respectively input into N decoders (decoders) for processing, to recover N pieces of channel information that are denoted as $\{H_1',$ $H_2', ..., H_N'\}$. Certainly, the N pieces of channel feedback information may alternatively be jointly processed by using a more complex decoder. This is not limited in this embodiment of this application. The N decoders may be N times of implementation of a same AI model; the N decoders are N different AI models; or the N decoders are P (P is less than N) AI models, where a part of the decoders use a same AI model. This is not limited in this embodiment of this application.

(2) The compression and feedback method indicated by the first information is the compression and feedback method 2.

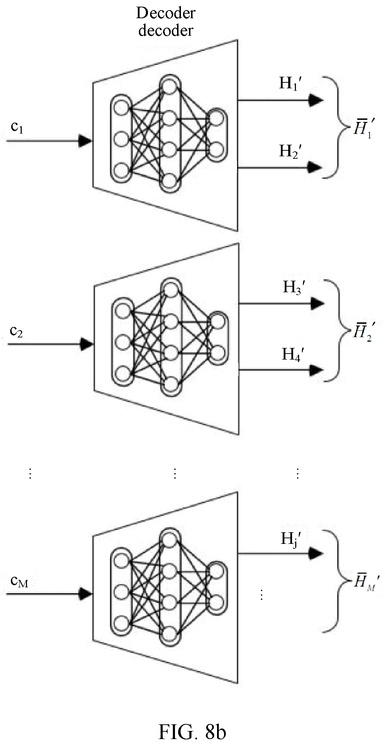

FIG. 8b is another diagram of channel information recovery according to this embodiment of this application. FIG. 8b may be understood as an inverse process of FIG. 7b, and is a diagram of channel information recovery when the channel information is compressed by using the compression and feedback method 2. When the compression and feedback method indicated by the first information is the compression and feedback method 2, the third information includes the M pieces of channel feedback information that are denoted as $\{c_1, c_2, ..., c_M\}$, where the channel feedback information $c_i$ represents the channel information subset $\overline{H}_i$. As shown in FIG. 8b, the M pieces of channel feedback information are respectively input into M decoders (decoders) for processing, to recover M channel information subsets. A union set of the M channel information subsets is the N pieces of channel information, and is denoted as $\{H_1', H_2', ..., H_N'\}$,

that is, $\bigcup_{i=1}^{M} \overline{H}_i' = \{H_1', H_2', ..., H_N'\}$, and an intersection set of any two channel information subsets in the M channel information subsets is an empty set. Certainly, the M pieces of channel feedback information may alternatively be jointly processed by using a more complex decoder. This is not limited in this embodiment of this application. The M decoders may be M times of implementation of a same AI model; the M decoders are M different AI models; or the M decoders are P (P is less than M) AI models, where a part of the decoders use a same AI model. This is not limited in this embodiment of this application.

For example, as shown in FIG. 8b, the channel feedback information $c_1$ is input into a decoder for processing to obtain a channel information subset $\overline{H}_1'$, where the channel information subset $\overline{H}_1'$ includes the channel information $H_1'$ and $H_2'$; and the channel feedback information $c_2$ is input into another decoder for processing to obtain a channel information subset $\overline{H}_2'$, where the channel information subset $\overline{H}_2'$ includes the channel information $H_3'$ and $H_4'$.

(3) The compression and feedback method indicated by the first information is the compression and feedback method 3.

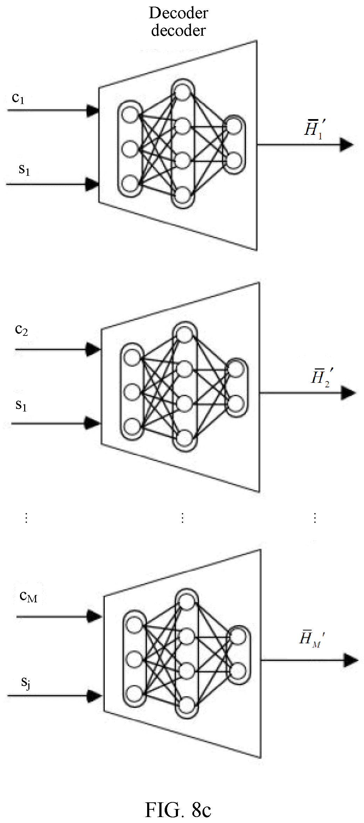

FIG. 8c is still another diagram of channel information recovery according to this embodiment of this application. FIG. 8c may be understood as an inverse process of FIG. 7c, and is a diagram of channel information recovery when the channel information is compressed by using the compression and feedback method 3. When the compression and feedback method indicated by the first information is the compression and feedback method 3, the third information includes the M+K pieces of channel feedback information that are denoted as $\{c_1, c_2, ..., c_M, s_1, s_2, ..., s_K\}$, where channel feedback information $c_i$ represents specific information of a channel information subset $\overline{H}_i$, and channel feedback information $s_i$ represents common information of at least two channel information subsets. As shown in FIG. 8c, channel feedback information related to each channel information subset is input into a decoder for processing, to recover channel information in each channel information subset. For example, the channel feedback information $c_i$ representing the specific information of the channel information subset $\overline{H}_i$ and channel feedback information $s_l$ representing common information of the channel information subset $\overline{H}_i$ are input into a decoder for processing, to recover corresponding channel information. Certainly, the M+K pieces of channel feedback information may alternatively be jointly processed by using a more complex decoder. This is not limited in this embodiment of this application. As shown in FIG. 8c, N pieces of channel information may be recovered by using a total of M decoders. The M decoders may be M times of implementation of a same AI model; the M decoders are M different AI models; or the M decoders are P (P is less than M) AI models, where a part of the decoders use a same AI model. This is not limited in this embodiment of this application.

For example, as shown in FIG. 8c, the channel feedback information $c_1$ and the channel feedback information $s_1$ are input into a decoder for processing to obtain a channel information subset $\overline{H}_1'$; and the channel feedback information $c_2$ and the channel feedback information $s_1$ are input into another decoder for processing to obtain a channel information

subset $\overline{H}_2'$. $\bigcup_{i=1}^{M} \overline{H}_i' = \{H_1', H_2', ..., H_N'\}$, where $H_i'$ represents recovered channel information.

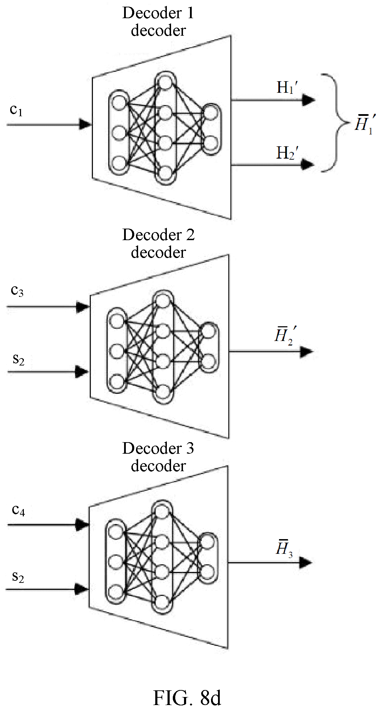

In a possible implementation, the compression and feedback method indicated by the first information may be a combination of at least two of the foregoing three compression and feedback methods (the compression and feedback method 1, the compression and feedback method 2, and the compression and feedback method 3). FIG. 8d is yet another diagram of channel information recovery according to this embodiment of this application. FIG. 8d may be understood as an inverse process of FIG. 7d, and is a diagram of channel information recovery when the compression and feedback method used by the second communication apparatus is the combination of the compression and feedback method 2 and the compression and feedback method 3. As shown in FIG. 8d, the channel feedback information $c_1$ is input into a decoder 1 for processing to obtain a channel information subset $\overline{H}_1$', where the channel information subset $\overline{H}_1$' includes channel information $H_1$' and $H_2$'; the channel feedback information $s_2$ and the channel feedback information $c_3$ are input into a decoder 2 for processing to obtain a channel information subset $\overline{H}_2$'; and the channel feedback information $s_2$ and the channel feedback information $c_4$ are input into a decoder 3 for processing to obtain a channel information subset $\overline{H}_3$'. It may be understood that the channel feedback information $c_1$ represents all the content of the channel information subset $\overline{H}_1$, the channel feedback information $s_2$ may represent the common information of the channel information subset $\overline{H}_2$ and the channel information subset $\overline{H}_3$, the channel feedback information $c_3$ may represent the specific information of the channel information subset $\overline{H}_2$, and the channel feedback information $c_4$ may represent the specific information of the channel information subset $\overline{H}_3$. The decoder 1 is different from the decoder 2 and the decoder 3, and the decoder 2 and the decoder 3 may be the same or may be different. This is not limited in this embodiment of this application.

In a possible implementation, the first information indicates the quantity of pieces of channel feedback information and the correspondence between the channel feedback information and the N pieces of channel information by using a 0/1 matrix. It is assumed that the 0/1 matrix is:

$$\begin{bmatrix} 1 & 0 & 1 & 0 & 0 & 0 \\ 0 & 1 & 1 & 0 & 0 & 0 \\ 0 & 0 & 0 & 1 & 0 & 1 \\ 0 & 0 & 0 & 0 & 1 & 1 \end{bmatrix}.$$

In the 0/1 matrix, a row represents channel information, and a column represents channel feedback information. If an element in an $i^{th}$ row and a $j^{th}$ column is 1, it indicates that a $j^{th}$ piece of channel feedback information corresponds to an $i^{th}$ piece of channel information, that is, the $j^{th}$ piece of channel feedback information is obtained based on the $i^{th}$ piece of channel information, in other words, the $j^{th}$ piece of channel feedback information includes all or a part of features of the $i^{th}$ piece of channel information. If an element in an $i^{th}$ row and a $j^{th}$ column is 0, it indicates that there is no correspondence between a $j^{th}$ piece of channel feedback information and an $i^{th}$ piece of channel information, in other words, the $j^{th}$ piece of channel feedback information does not include any feature of the $i^{th}$ piece of channel information. It can be learned based on the 0/1 matrix that a $1^{st}$ piece of channel feedback information and a $3^{rd}$ piece of channel feedback information correspond to channel information $H_1$. Therefore, the $1^{st}$ piece of channel feedback information and the $3^{rd}$ piece of channel feedback information may be input into a decoder 1 for processing to obtain channel information $H_1$'. A $2^{nd}$ piece of channel feedback information and the $3^{rd}$ piece of channel feedback information correspond to channel information $H_2$. Therefore, the $2^{nd}$ piece of channel feedback information and the $3^{rd}$ piece of channel feedback information may be input into a decoder 2 for processing to obtain channel information $H_2$'. A $4^{th}$ piece of channel feedback information and a $6^{th}$ piece of channel feedback information correspond to channel information $H_3$. Therefore, the $4^{th}$ piece of channel feedback information and the $6^{th}$ piece of channel feedback information may be input into a decoder 3 for processing to obtain channel information $H_3$'. A $5^{th}$ piece of channel feedback information and the $6^{th}$ piece of channel feedback information correspond to channel information $H_4$. Therefore, the $5^{th}$ piece of channel feedback information and the $6^{th}$ piece of channel feedback information may be input into a decoder 4 for processing to obtain channel information $H_4$'.

It may be understood that, at a receive end, processing performed when the first information indicates the quantity of pieces of channel feedback information and the correspondence between the channel feedback information and the N pieces of channel information by using a list is similar to that performed when the first information indicates the quantity of pieces of channel feedback information and the correspondence between the channel feedback information and the N pieces of channel information by using the 0/1 matrix. Details are not described herein one by one.

In this embodiment of this application, the second communication apparatus flexibly selects the appropriate compression and feedback method based on the similarity degree between the channel information, so that complexity of the channel compression and feedback can be reduced, and the channel information compression ratio can be improved. Then, the first communication apparatus is notified of the determined compression and feedback method by using the first information, to align understandings of the two parties on the channel feedback information, and help the first communication apparatus recover the channel information. In addition, in this embodiment of this application, there is no need to separately design the compression and feedback methods in the multi-station scenario and the multi-frequency-band scenario, so that the unified channel compression and feedback method can be used.

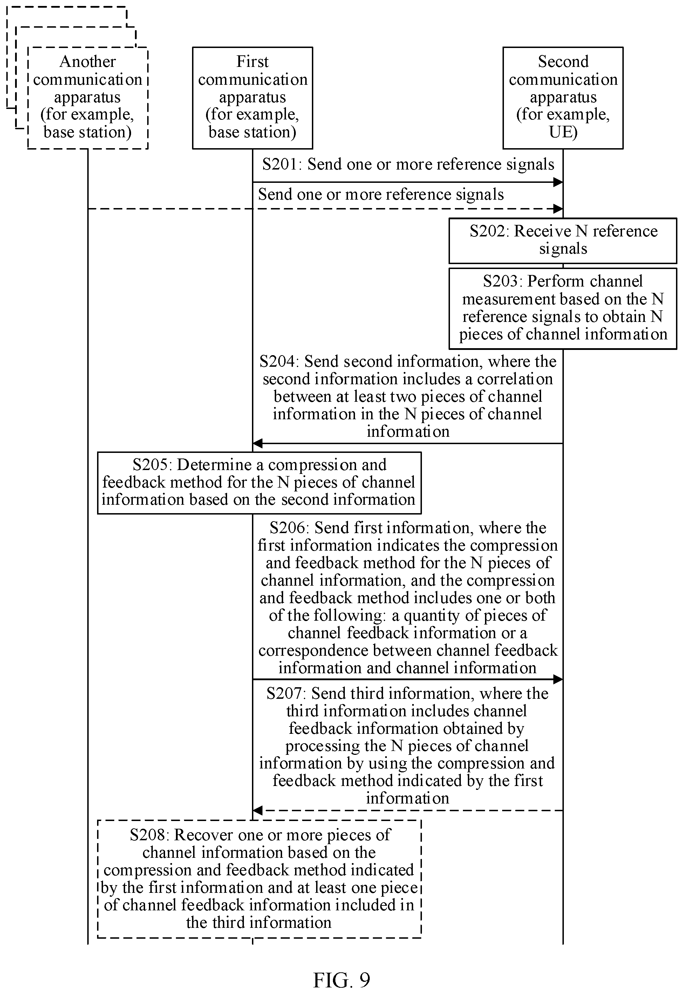

FIG. 9 is another schematic flowchart of a communication method according to an embodiment of this application. The method mainly describes a case in which a base station selects an appropriate compression and feedback method, and notifies a UE of the compression and feedback method by using indication information (namely, first information in this embodiment of this application), so that the UE processes channel information by using the compression and feedback method indicated by the base station, and feeds back, to the base station, compression and feedback information obtained through the processing.

As shown in FIG. 9, the communication method includes but is not limited to the following steps.

S201: A first communication apparatus (for example, the base station or a part of the base station) sends one or more reference signals to a second communication apparatus (for example, the UE).

S202: The second communication apparatus (for example, the UE) receives N reference signals. N is an integer greater than or equal to 2.

S203: The second communication apparatus (for example, the UE) performs channel measurement based on the N reference signals to obtain N pieces of channel information.

In a possible implementation, for implementations of step S201 to step S203 in this embodiment of this application, refer to the implementations of step S101 to step S103 in the embodiment shown in FIG. 6. Details are not described herein again.

S204: The second communication apparatus (for example, the UE) sends second information to the first communication apparatus (for example, the base station or a part of the base station), where the second information includes a correlation between at least two pieces of channel information in the N pieces of channel information. The second information is for determining the compression and feedback method for the N pieces of channel information.

Correspondingly, the first communication apparatus (for example, the base station or the part of the base station) receives the second information.

S205: The first communication apparatus (for example, the base station or a part of the base station) determines the compression and feedback method for the N pieces of channel information based on the second information.

In a possible implementation, after obtaining the N pieces of channel information, the second communication apparatus may compute the correlation between the at least two pieces of channel information in the N pieces of channel information. For example, the second communication apparatus may compute a correlation between every two pieces of channel information in the N pieces of channel information, to determine a similarity degree between N channels corresponding to the N pieces of channel information. Then, the second communication apparatus may send the second information to the first communication apparatus, where the second information includes the correlation between every two pieces of channel information in the N pieces of channel information. For example, if channel information is an eigenvector obtained through singular value decomposition (SVD) on a channel response, an inner product between eigenvectors may represent a correlation between channel information. For another example, if channel information is a channel response (represented in a form of a matrix), the channel response may be converted into a vector, and an inner product between vectors represents a correlation between channel information. For example, a larger inner product value between vectors indicates a higher correlation between channel information, and also indicates a higher similarity degree between channels.

For example, the second communication apparatus may send, to the first communication apparatus, the second information including the correlation between every two pieces of channel information (for example, an inner product value between vectors) in the N pieces of channel information. Alternatively, after quantizing or normalizing the correlation between every two pieces of channel information (for example, an inner product value between vectors) in the N pieces of channel information, the second communication apparatus sends, to the first communication apparatus, the second information including a quantized or normalized correlation. In a possible implementation, the second communication apparatus may convert the correlation between every two pieces of channel information (for example, the inner product value between the vectors) in the N pieces of channel information into a vector or a matrix, and send, to the first communication apparatus, the second information including the vector or the matrix.

It may be understood that, in a multi-station scenario (for example, a multi-station multi-frequency-band scenario or a multi-station single-frequency-band scenario), the second communication apparatus may send the second information to a specific first communication apparatus (for example, a master station or any base station) that participates in coordinated multi-station transmission, to help the first communication apparatus determine the compression and feedback method for the N pieces of channel information based on the content of the second information. Certainly, the second communication apparatus may alternatively send the second information to a plurality of first communication apparatuses that participate in coordinated multi-station transmission, but only a specified first communication apparatus may reply with the first information, or the second communication apparatus may receive first information replied by only a specific first communication apparatus.

In a possible implementation, after receiving the second information, the first communication apparatus may determine the compression and feedback method for the N pieces of channel information based on the correlation between the at least two pieces of channel information in the N pieces of channel information. For a method for determining the compression and feedback method by the first communication apparatus, refer to the method for determining the compression and feedback method by the second communication apparatus in the embodiment shown in FIG. 6. Details are not described herein again.

S206: The first communication apparatus (for example, the base station or a part of the base station) sends the first information to the second communication apparatus (for example, the UE), where the first information indicates the compression and feedback method for the N pieces of channel information, and the compression and feedback method includes one or both of the following: a quantity of pieces of channel feedback information or a correspondence between channel feedback information and channel information. One piece of channel information corresponds to one or more pieces of channel feedback information.

Correspondingly, the second communication apparatus (for example, the UE) receives the first information. The second communication apparatus (for example, the UE) may further determine the compression and feedback method for the N pieces of channel information based on the first information.

In a possible implementation, after determining the compression and feedback method for the N pieces of channel information, the first communication apparatus may send the first information to the second communication apparatus, where the first information may indicate the compression and feedback method for the N pieces of channel information. The compression and feedback method may be represented by the quantity of pieces of channel feedback information and the correspondence between the channel feedback information and the channel information. For an implementation of the first information, refer to the related descriptions in the embodiment shown in FIG. 6. Details are not described herein again.

In a possible implementation, the first communication apparatus and the second communication apparatus may agree on the quantity of pieces of channel feedback information and the correspondence between the channel feedback information and the channel information by using the indication of the first information. The first communication apparatus and the second communication apparatus may further agree on an AI model to be used by an encoder for generating each piece of channel feedback information. For a specific implementation, refer to the related descriptions in the embodiment shown in FIG. 6. Details are not described herein again.

In a possible implementation, after step S206, the communication method shown in FIG. 9 further includes the following steps.

S207: The second communication apparatus (for example, the UE) sends third information to the first communication apparatus (for example, the base station or a part of the base station), where the third information includes channel feedback information obtained by processing the N pieces of channel information by using the compression and feedback method indicated by the first information.

Correspondingly, the first communication apparatus (for example, the base station or the part of the base station) receives the third information.

S208: The first communication apparatus (for example, the base station or a part of the base station) recovers one or more pieces of channel information based on the compression and feedback method indicated by the first information and at least one piece of channel feedback information included in the third information.

In a possible implementation, for implementations of step S207 and step S208 in this embodiment of this application, refer to the implementations of step S106 and step S107 in the embodiment shown in FIG. 6. Details are not described herein again.

In this embodiment of this application, the second communication apparatus notifies the first communication apparatus of the correlation between the channel information by using the second information, and the first communication apparatus flexibly selects the appropriate compression and feedback method based on the correlation between the channel information, so that complexity of channel compression and feedback can be reduced, and a channel information compression ratio can be improved. Then, the second communication apparatus is notified of the determined compression and feedback method by using the first information, to align understandings of the two parties on the channel feedback information, and help the second communication apparatus compress the channel information. In addition, in this embodiment of this application, there is no need to separately design compression and feedback methods in the multi-station scenario and a multi-frequency-band scenario, so that a unified channel compression and feedback method can be used.

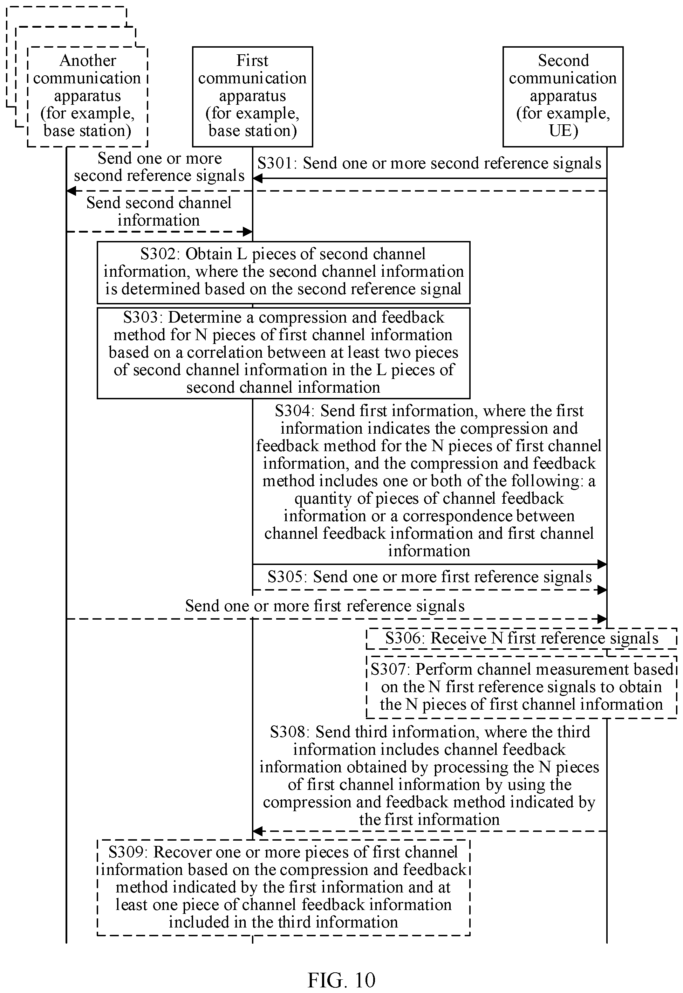

FIG. 10 is still another schematic flowchart of a communication method according to an embodiment of this application. The method mainly describes a case in which a base station determines a compression and feedback method for downlink channel information (namely, first channel information in this embodiment of this application) based on a correlation between uplink channel information (namely, second channel information in this embodiment of this application), and notifies a UE of the compression and feedback method by using indication information (namely, first information in this embodiment of this application), so that the UE processes the downlink channel information by using the compression and feedback method indicated by the base station, and feeds back, to the base station, compression and feedback information obtained through the processing. The method is applicable to a scenario in which there is reciprocity between uplink and downlink channels and an uplink channel is not severely aged.

As shown in FIG. 10, the communication method includes but is not limited to the following steps.

S301: A second communication apparatus (for example, the UE) sends one or more second reference signals.

Correspondingly, a first communication apparatus (for example, the base station or a part of the base station) receives the one or more second reference signals, and performs channel measurement based on the received second reference signal to obtain one or more pieces of second channel information. One piece of second channel information is obtained by performing channel measurement based on one second reference signal.

S302: The first communication apparatus (for example, the base station or a part of the base station) obtains L pieces of second channel information, where the second channel information is determined based on the second reference signal. L is an integer greater than or equal to 2.

In a possible implementation, the second reference signal in this embodiment of this application is an uplink reference signal, for example, an SRS or a DMRS. Correspondingly, the second channel information is uplink channel information, for example, an uplink channel response, an eigenvector obtained through singular value decomposition (SVD) on the uplink channel response, or an eigenmatrix including a plurality of eigenvectors.

In a possible implementation, the communication method provided in this embodiment of this application may be applied to a compression and feedback scenario of a plurality of pieces of channel information. The "plurality of pieces of channel information" may be understood as channel information corresponding to a plurality of base stations in a single frequency band (multi-station single-frequency-band for short), channel information corresponding to a single base station in a plurality of frequency bands (single-station multi-frequency-band for short), channel information corresponding to a plurality of base stations in a plurality of frequency bands (multi-station multi-frequency-band for short), channel information corresponding to a plurality of reference signals of a single base station in a single frequency band, or the like. "Multi-frequency-band" may also be understood as "multi-carrier".

In a possible implementation, the second communication apparatus sends the one or more second reference signals, and the first communication apparatus may receive one or more of the second reference signals. For example, in the multi-station single-frequency-band scenario, the second communication apparatus sends one second reference signal, and the first communication apparatus receives the second reference signal. In the multi-station multi-frequency-band scenario, the second communication apparatus sends a plurality of second reference signals, and the first communication apparatus receives the plurality of second reference signals. In the single-station multi-frequency-band scenario, the second communication apparatus sends L second reference signals, and the first communication apparatus receives the L second reference signals. In short, in the multi-station single-frequency-band scenario, the one second reference signal sent by the second communication apparatus may be completely received by the first communication apparatus, and certainly, another communication apparatus may also receive the second reference signal. In the multi-station multi-frequency-band scenario, the plurality of second reference signals sent by the second communication apparatus may be all received by the first communication apparatus. Certainly, another communication apparatus may also receive the plurality of second reference signals. In the single-station multi-frequency-band scenario, the L second reference signals sent by the second communication apparatus are all sent to the first communication apparatus. Transmission frequency bands of the plurality of second reference signals sent by the second communication apparatus may be different, may be partially the same, or may be completely the same. This is not limited in this embodiment of this application.

In another possible implementation, the communication method provided in this embodiment of this application may alternatively be applied to a compression and feedback scenario of channel information for a single base station in a single frequency band (single-station single-frequency-band for short). In the single-station single-frequency-band scenario, the second communication apparatus may send L second reference signals (in one frequency band), and the L second reference signals may be sent at different moments. Correspondingly, the first communication apparatus may receive the L second reference signals.

In a possible implementation, after receiving a second reference signal, the first communication apparatus may perform channel measurement based on the second reference signal to obtain second channel information. For example, after receiving one second reference signal, the first communication apparatus may perform channel measurement once; or after receiving a plurality of second reference signals, the first communication apparatus may respectively perform channel measurement based on the plurality of second reference signals. One piece of second channel information may be obtained by performing channel measurement based on one second reference signal.

In a possible implementation, if the first communication apparatus receives L second reference signals, the first communication apparatus may obtain L pieces of second channel information by performing channel measurement based on the L second reference signals. In another possible implementation, if the first communication apparatus receives W (W is a positive integer less than L) second reference signals, the first communication apparatus may obtain W pieces of second channel information by performing channel measurement based on the W second reference signals. Remaining L-W pieces of second channel information may be from another communication apparatus. In other words, the first communication apparatus performs channel measurement based on the received second reference signal to obtain the W pieces of second channel information; and then the first communication apparatus receives the second channel information sent by the another communication apparatus, to obtain the L-W pieces of second channel information. In this way, the first communication apparatus obtains the L pieces of second channel information. The L-W pieces of second channel information sent by the another communication apparatus may be compressed and fed back based on a conventional codebook, or may be compressed and fed back by using a compression and feedback method (for example, the compression and feedback method 1, the compression and feedback method 2, or the compression and feedback method 3 in the embodiment shown in FIG. 6) provided in this application. This is not limited in this embodiment of this application.

S303: The first communication apparatus (for example, the base station or a part of the base station) determines the compression and feedback method for N pieces of first channel information based on a correlation between at least two pieces of second channel information in the L pieces of second channel information.

In a possible implementation, after obtaining the L pieces of second channel information, the first communication apparatus may compute the correlation between the at least two pieces of second channel information in the L pieces of second channel information. For example, the first communication apparatus may compute a correlation between every two pieces of second channel information in the L pieces of second channel information, to determine a similarity degree between L channels corresponding to the L pieces of second channel information. For example, if channel information is an eigenvector obtained through singular value decomposition (SVD) on a channel response, an inner product between eigenvectors may represent a correlation between channel information. For another example, if channel information is a channel response (represented in a form of a matrix), the channel response may be converted into a vector, and an inner product between vectors represents a correlation between channel information. For example, a larger inner product value between vectors indicates a higher correlation between channel information, and also indicates a higher similarity degree between channels.

In a possible implementation, the first communication apparatus may determine the compression and feedback method for the N pieces of first channel information based on the correlation between the at least two pieces of second channel information in the L pieces of second channel information. For a method for determining the compression and feedback method by the first communication apparatus, refer to the method for determining the compression and feedback method by the second communication apparatus in the embodiment shown in FIG. 6. Details are not described herein again.

S304: The first communication apparatus (for example, the base station or a part of the base station) sends the first information to the second communication apparatus (for example, the UE), where the first information indicates the compression and feedback method for the N pieces of first channel information, and the compression and feedback method includes one or both of the following: a quantity of pieces of channel feedback information or a correspondence between channel feedback information and first channel information. One piece of first channel information corresponds to one or more pieces of channel feedback information.

Correspondingly, the second communication apparatus (for example, the UE) receives the first information. The second communication apparatus (for example, the UE) may further determine the compression and feedback method for the N pieces of first channel information based on the first information.

In a possible implementation, after determining the compression and feedback method for the N pieces of first channel information, the first communication apparatus may send the first information to the second communication apparatus, where the first information may indicate the compression and feedback method for the N pieces of first channel information. The compression and feedback method may be represented by the quantity of pieces of channel feedback information and the correspondence between the channel feedback information and the first channel information. For an implementation of the first information, refer to the related descriptions in the embodiment shown in FIG. 6. Details are not described herein again.

In a possible implementation, the first communication apparatus and the second communication apparatus may agree on the quantity of pieces of channel feedback information and the correspondence between the channel feedback information and the first channel information by using the indication of the first information. The first communication apparatus and the second communication apparatus may further agree on an AI model to be used by an encoder for generating each piece of channel feedback information. For a specific implementation, refer to the related descriptions in the embodiment shown in FIG. 6. Details are not described herein again.

In a possible implementation, after step S304, the communication method shown in FIG. 10 further includes the following steps.

S305: The first communication apparatus (for example, the base station or a part of the base station) sends one or more first reference signals to the second communication apparatus (for example, the UE).

S306: The second communication apparatus (for example, the UE) receives N first reference signals. N is an integer greater than or equal to 2.

S307: The second communication apparatus (for example, the UE) performs channel measurement based on the N first reference signals to obtain the N pieces of first channel information.

In a possible implementation, for implementations of step S305 to step S307 in this embodiment of this application, refer to the implementations of step S101 to step S103 in the embodiment shown in FIG. 6. Details are not described herein again.

In a possible implementation, the first reference signal in this embodiment of this application is a downlink reference signal, for example, a CSI-RS, an SSB, or a DMRS. Correspondingly, the first channel information is downlink channel information, for example, a downlink channel response, an eigenvector obtained through singular value decomposition (SVD) on the downlink channel response, or an eigenmatrix including a plurality of eigenvectors.

S308: The second communication apparatus (for example, the UE) sends third information to the first communication apparatus (for example, the base station or a part of the base station), where the third information includes channel feedback information obtained by processing the N pieces of first channel information by using the compression and feedback method indicated by the first information.

S309: The first communication apparatus (for example, the base station or a part of the base station) recovers one or more pieces of first channel information based on the compression and feedback method indicated by the first information and at least one piece of channel feedback information included in the third information.

In a possible implementation, for implementations of step S308 and step S309 in this embodiment of this application, refer to the implementations of step S106 and step S107 in the embodiment shown in FIG. 6. Details are not described herein again.

In this embodiment of this application, the first communication apparatus determines the compression and feedback method for the downlink channel information (namely, the first channel information) by using the correlation between the uplink channel information (namely, the second channel information). This is applicable to the scenario in which there is reciprocity between the uplink and downlink channels or the uplink channel is not severely aged. The first communication apparatus further notifies, by using the indication information (namely, the first information), the second communication apparatus of the compression and feedback method to be used, so that the second communication apparatus processes the downlink channel information by using the compression and feedback method indicated by the first communication apparatus, and feeds back, to the first communication apparatus, the compression and feedback information obtained through the processing. This can improve flexibility of channel information feedback, and improve feedback accuracy while reducing feedback overheads. In addition, in this embodiment of this application, there is no need to separately design compression and feedback methods in a multi-station scenario and a multi-frequency-band scenario, so that a unified channel compression and feedback method can be used.

The foregoing content describes in detail the method provided in this application. To facilitate implementation of the foregoing solutions in embodiments of this application, embodiments of this application further provide a corresponding apparatus or device.

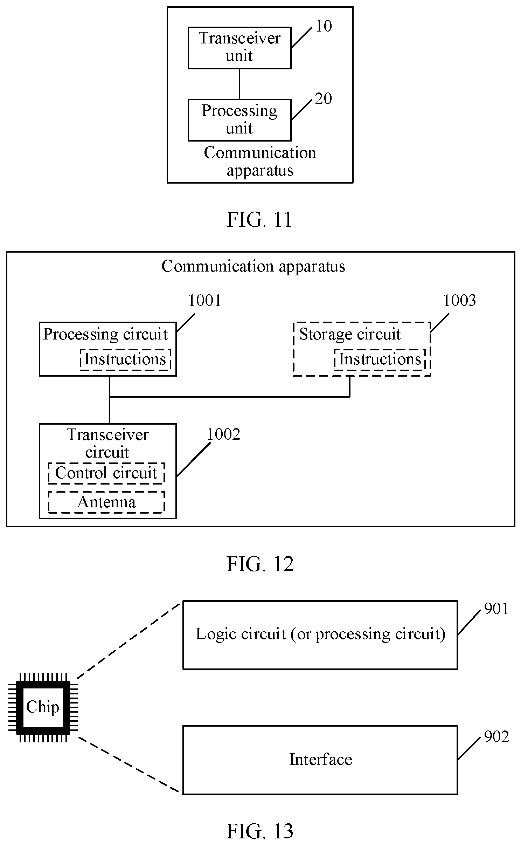

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, the division into modules is an example, and is merely logical function division. In an actual implementation, another division manner may be used. The following describes in detail the communication apparatus in embodiments of this application with reference to FIG. 11 to FIG. 13.

FIG. 11 is a diagram of a structure of a communication apparatus according to an embodiment of this application. As shown in FIG. 11, the communication apparatus may include a transceiver unit 10 and a processing unit 20.

In some embodiments of this application, the communication apparatus may be the first communication apparatus described above or a chip or a circuit disposed in the first communication apparatus. In other words, the communication apparatus may be configured to perform the steps, functions, or the like performed by the first communication apparatus in the foregoing method embodiments.

In a design, the transceiver unit 10 is configured to receive first information, where the first information indicates a compression and feedback method for N pieces of channel information, and the compression and feedback method includes one or both of the following: a quantity of pieces of channel feedback information or a correspondence between channel feedback information and channel information, where one piece of channel information corresponds to one or more pieces of channel feedback information. The processing unit 20 is configured to determine the compression and feedback method based on the first information. N is an integer greater than or equal to 2.

In this embodiment of this application, for descriptions of the first information, the compression and feedback method for the N pieces of channel information, and the like, refer to the descriptions in the method embodiment shown in FIG. 6. Details are not described herein again.

It may be understood that the specific descriptions of the transceiver unit and the processing unit in this embodiment of this application are merely examples. For specific functions, steps, or the like of the transceiver unit and the processing unit, refer to the method embodiment shown in FIG. 6. Details are not described herein again. In addition, for technical effects in this embodiment of this application, refer to the technical effects in the method embodiment shown in FIG. 6. For brevity, details are not described herein again.

In another design, the processing unit 20 is configured to determine a compression and feedback method for N pieces of first channel information. The transceiver unit 10 is configured to send first information, where the first information indicates the compression and feedback method for the N pieces of first channel information, and the compression and feedback method includes one or both of the following: a quantity of pieces of channel feedback information or a correspondence between channel feedback information and first channel information, where one piece of first channel information corresponds to one or more pieces of channel feedback information. N is an integer greater than or equal to 2.

For example, the transceiver unit 10 is further configured to receive second information, where the second information includes a correlation between at least two pieces of first channel information in the N pieces of first channel information, and the correlation between the at least two pieces of first channel information in the N pieces of first channel information is for determining the compression and feedback method for the N pieces of first channel information.

For example, the first channel information is determined based on a first reference signal. The transceiver unit 10 is further configured to receive one or more second reference signals, where the second reference signal is for determining second channel information. The processing unit 20 is configured to obtain a correlation between at least two pieces of second channel information in L pieces of second channel information, where the correlation between the at least two pieces of second channel information in the L pieces of second channel information is for determining the compression and feedback method for the N pieces of first channel information. L is an integer greater than or equal to 2.

In this embodiment of this application, for descriptions of the first information, the second information, the compression and feedback method for the N pieces of first channel information, and the like, refer to the descriptions in the method embodiment shown in FIG. 9 or FIG. 10. Details are not described herein again.

It may be understood that the specific descriptions of the transceiver unit and the processing unit in this embodiment of this application are merely examples. For specific functions, steps, or the like of the transceiver unit and the processing unit, refer to the method embodiment shown in FIG. 9 or FIG. 10. Details are not described herein again. In addition, for technical effects in this embodiment of this application, refer to the technical effects in the method embodiment shown in FIG. 9 or FIG. 10. For brevity, details are not described herein again.

Still refer to FIG. 11. In some other embodiments of this application, the communication apparatus may be the second communication apparatus described above or a chip or a circuit disposed in the second communication apparatus. In other words, the communication apparatus may be configured to perform the steps, functions, or the like performed by the second communication apparatus in the foregoing method embodiments.

In a design, the processing unit 20 is configured to obtain N pieces of channel information, where N is an integer greater than or equal to 2. The transceiver unit 10 is configured to send first information, where the first information indicates a compression and feedback method for the N pieces of channel information, and the compression and feedback method includes one or both of the following: a quantity of pieces of channel feedback information or a correspondence between channel feedback information and channel information, where one piece of channel information corresponds to one or more pieces of channel feedback information.

In this embodiment of this application, for descriptions of the first information, the compression and feedback method for the N pieces of channel information, and the like, refer to the descriptions in the method embodiment shown in FIG. 6. Details are not described herein again.

It may be understood that the specific descriptions of the transceiver unit and the processing unit in this embodiment of this application are merely examples. For specific functions, steps, or the like of the transceiver unit and the processing unit, refer to the method embodiment shown in FIG. 6. Details are not described herein again. In addition, for technical effects in this embodiment of this application, refer to the technical effects in the method embodiment shown in FIG. 6. For brevity, details are not described herein again.

In another design, the processing unit 20 is configured to obtain N pieces of first channel information, where N is an integer greater than or equal to 2. The transceiver unit 10 is configured to receive first information, where the first information indicates a compression and feedback method for the N pieces of first channel information, and the compression and feedback method includes one or both of the following: a quantity of pieces of channel feedback information or a relationship between channel feedback information and first channel information, where one piece of first channel information corresponds to one or more pieces of channel feedback information.

For example, the transceiver unit 10 is further configured to send second information, where the second information includes a correlation between at least two pieces of first channel information in the N pieces of first channel information, and the correlation between the at least two pieces of first channel information in the N pieces of first channel information is for determining the compression and feedback method for the N pieces of first channel information.

For example, the first channel information is determined based on a first reference signal received by the transceiver unit 10. The transceiver unit 10 is further configured to send one or more second reference signals, where the second reference signal is for determining second channel information, and a correlation between second channel information is for determining the compression and feedback method for the N pieces of first channel information.

In this embodiment of this application, for descriptions of the first information, the second information, the compression and feedback method for the N pieces of first channel information, and the like, refer to the descriptions in the method embodiment shown in FIG. 9 or FIG. 10. Details are not described herein again.

It may be understood that the specific descriptions of the transceiver unit and the processing unit in this embodiment of this application are merely examples. For specific functions, steps, or the like of the transceiver unit and the processing unit, refer to the method embodiment shown in FIG. 9 or FIG. 10. Details are not described herein again. In addition, for technical effects in this embodiment of this application, refer to the technical effects in the method embodiment shown in FIG. 9 or FIG. 10. For brevity, details are not described herein again.

The foregoing describes the communication apparatus in embodiments of this application, and the following describes a possible product form of the communication apparatus. It should be understood that a product in any form that has a function of the communication apparatus in FIG. 11 falls within the protection scope of embodiments of this application. It should be further understood that the following description is merely an example, and does not limit the product form of the communication apparatus in embodiments of this application.

In a possible implementation, in the communication apparatus shown in FIG. 11, the processing unit 20 may be one or more processing circuits; and the transceiver unit 10 may be a transceiver circuit, or the transceiver unit 10 may be a sending unit and a receiving unit, where the sending unit may be a transmitter circuit, and the receiving unit may be a receiver circuit. The sending unit and the receiving unit are integrated into one component, for example, a transceiver circuit. In this embodiment of this application, the processing circuit and the transceiver circuit may be coupled, or may be connected in another manner. A manner of connecting the processing circuit and the transceiver circuit is not limited in this embodiment of this application. In a process of performing the foregoing method, a process of sending information in the foregoing method may be understood as a process of outputting the information by the processing circuit. When outputting the information, the processing circuit outputs the information to the transceiver circuit, so that the transceiver circuit transmits the information. After the information is output by the processing circuit, other processing may further need to be performed on the information before the information arrives at the transceiver circuit. Similarly, a process of receiving information in the foregoing method may be understood as a process of receiving the input information by the processing circuit. When the processing circuit receives the input information, the transceiver circuit receives the information, and inputs the information into the processing circuit. Further, after the transceiver circuit receives the information, other processing may need to be performed on the information before the information is input into the processing circuit.

FIG. 12 is another diagram of a structure of a communication apparatus according to an embodiment of this application. As shown in FIG. 12, the communication apparatus provided in this embodiment of this application may be configured to implement the methods described in the foregoing method embodiments. Refer to the descriptions in the foregoing method embodiments. The communication apparatus may be a first communication apparatus, a second communication apparatus, or a chip in the first communication apparatus or the second communication apparatus. For example, the communication apparatus includes one or more processing circuits 1001 and a transceiver circuit 1002. The communication apparatus may further include a storage circuit 1003. In an implementation, the communication apparatus further includes an input/output apparatus (for example, a touchscreen, a display, or a keyboard that is mainly configured to receive data input by a user and output data to the user and that is not shown in the figure).

The processing circuit 1001 is mainly configured to: process a communication protocol and communication data, control the entire communication apparatus, execute a software program, and process data of the software program. The storage circuit 1003 is mainly configured to store the software program and data. The transceiver circuit 1002 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave.

After the communication apparatus is powered on, the processing circuit 1001 may read the software program in the storage circuit 1003, interpret and execute instructions of the software program, and process the data of the software program. When data needs to be sent in a wireless manner, the processing circuit 1001 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processing circuit 1001. The processing circuit 1001 converts the baseband signal into data, and processes the data.

In another implementation, the radio frequency circuit and the antenna may be disposed independent of the processing circuit that performs baseband processing. For example, in a distributed scenario, the radio frequency circuit and the antenna may be remotely disposed independent of the communication apparatus.

The processing circuit 1001, the transceiver circuit 1002, and the storage circuit 1003 may be connected through a communication bus.

For example, when the communication apparatus is configured to perform the steps, methods, or functions performed by the first communication apparatus in the embodiment shown in FIG. 6, the processing circuit 1001 may be configured to perform step S105 and step S107 in FIG. 6, and/or configured to perform another process of the technology described in this specification; and the transceiver circuit 1002 may be configured to perform step S101 in FIG. 6, and/or configured to perform another process of the technology described in this specification.

For example, when the communication apparatus is configured to perform the steps, methods, or functions performed by the second communication apparatus in the embodiment shown in FIG. 6, the processing circuit 1001 may be configured to perform step S102 and step S103 in FIG. 6, and/or configured to perform another process of the technology described in this specification; and the transceiver circuit 1002 may be configured to perform step S104 and step S106 in FIG. 6, and/or configured to perform another process of the technology described in this specification.

For example, when the communication apparatus is configured to perform the steps, methods, or functions performed by the first communication apparatus in the embodiment shown in FIG. 9, the processing circuit 1001 may be configured to perform step S205 and step S208 in FIG. 9, and/or configured to perform another process of the technology described in this specification; and the transceiver circuit 1002 may be configured to perform step S201 and step S206 in FIG. 9, and/or configured to perform another process of the technology described in this specification.

For example, when the communication apparatus is configured to perform the steps, methods, or functions performed by the second communication apparatus in the embodiment shown in FIG. 9, the processing circuit 1001 may be configured to perform step S202 and step S203 in FIG. 9, and/or configured to perform another process of the technology described in this specification; and the transceiver circuit 1002 may be configured to perform step S204 and step S207 in FIG. 9, and/or configured to perform another process of the technology described in this specification.

For example, when the communication apparatus is configured to perform the steps, methods, or functions performed by the first communication apparatus in the embodiment shown in FIG. 10, the processing circuit 1001 may be configured to perform step S302, step S303, and step S309 in FIG. 10, and/or configured to perform another process of the technology described in this specification; and the transceiver circuit 1002 may be configured to perform step S304 and step S305 in FIG. 10, and/or configured to perform another process of the technology described in this specification.

For example, when the communication apparatus is configured to perform the steps, methods, or functions performed by the second communication apparatus in the embodiment shown in FIG. 10, the processing circuit 1001 may be configured to perform step S306 and step S307 in FIG. 10, and/or configured to perform another process of the technology described in this specification; and the transceiver circuit 1002 may be configured to perform step S301 and step S308 in FIG. 10, and/or configured to perform another process of the technology described in this specification.

In any one of the foregoing implementations, the transceiver circuit 1002 may include a transceiver or an interface circuit configured to implement receiving and sending functions. The transceiver circuit, an interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processing circuit 1001 may be included in a processor, the processor may store instructions, and the instructions may be a computer program. The computer program is run on the processing circuit 1001, to cause the communication apparatus to perform the methods described in the foregoing method embodiments. The computer program may be solidified in the processing circuit 1001. In this case, the processing circuit 1001 may be implemented by hardware.

The processing circuit and the transceiver circuit described in this application may be included in a chip, for example, implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), or an electronic device. The processing circuit and the transceiver circuit may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), or gallium arsenide (GaAs).

It may be understood that the communication apparatus described in this embodiment of this application may further have more components and the like than those shown in FIG. 12. This is not limited in this embodiment of this application. The foregoing method performed by the processing circuit and the transceiver circuit is merely an example. For specific steps performed by the processing circuit and the transceiver circuit, refer to the descriptions in the foregoing method embodiments.

In another possible implementation, in the communication apparatus shown in FIG. 11, the processing unit 20 may be one or more logic circuits or processing circuits, and the transceiver unit 10 may be an input/output interface, also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 13 is still another diagram of a structure of a communication apparatus according to an embodiment of this application. As shown in FIG. 13, the communication apparatus shown in FIG. 13 includes a logic circuit 901 and an interface 902. That is, the processing unit 20 may be implemented by the logic circuit 901, and the transceiver unit 10 may be implemented by the interface 902. The logic circuit (or the processing circuit) 901 may be a chip, for example, an integrated circuit or a system on chip (system on chip, SoC), a processing part in the chip, or the like. The interface 902 may be a communication interface, an input/output interface, a pin, or the like. For example, FIG. 13 shows an example in which the communication apparatus is a chip. The chip includes the logic circuit (or the processing circuit) 901 and the interface 902.

In this embodiment of this application, the logic circuit (or the processing circuit) and the interface may alternatively be coupled to each other. A specific manner of connecting the logic circuit (or the processing circuit) and the interface is not limited in this embodiment of this application.

For example, when the communication apparatus is configured to perform the steps, methods, or functions performed by the first communication apparatus in the foregoing method embodiments, the interface 902 is configured to receive first information, where the first information indicates a compression and feedback method for N pieces of channel information, and the compression and feedback method includes one or both of the following: a quantity of pieces of channel feedback information or a correspondence between channel feedback information and channel information, where one piece of channel information corresponds to one or more pieces of channel feedback information. The logic circuit 901 is configured to determine the compression and feedback method based on the first information. N is an integer greater than or equal to 2.

For example, when the communication apparatus is configured to perform the steps, methods, or functions performed by the second communication apparatus in the foregoing method embodiments, the logic circuit 901 is configured to obtain N pieces of channel information, where N is an integer greater than or equal to 2. The interface 902 is configured to send first information, where the first information indicates a compression and feedback method for the N pieces of channel information, and the compression and feedback method includes one or both of the following: a quantity of pieces of channel feedback information or a correspondence between channel feedback information and channel information, where one piece of channel information corresponds to one or more pieces of channel feedback information.

In this embodiment of this application, for descriptions of the first information, the compression and feedback method for the N pieces of channel information, and the like, refer to the descriptions in the method embodiment shown in FIG. 6. Details are not described herein again. It may be understood that, for specific descriptions of the logic circuit 901 and the interface 902, refer to the descriptions of the processing unit and the transceiver unit shown in FIG. 11. Details are not described herein again.

For example, when the communication apparatus is configured to perform the steps, methods, or functions performed by the first communication apparatus in the foregoing method embodiments, the logic circuit 901 is configured to determine a compression and feedback method for N pieces of first channel information. The interface 902 is configured to send first information, where the first information indicates the compression and feedback method for the N pieces of first channel information, and the compression and feedback method includes one or both of the following: a quantity of pieces of channel feedback information or a correspondence between channel feedback information and first channel information, where one piece of first channel information corresponds to one or more pieces of channel feedback information. N is an integer greater than or equal to 2.

For example, when the communication apparatus is configured to perform the steps, methods, or functions performed by the second communication apparatus in the foregoing method embodiments, the logic circuit (or the processing circuit) 901 is configured to obtain N pieces of first channel information, where N is an integer greater than or equal to 2. The interface 902 is configured to receive first information, where the first information indicates a compression and feedback method for the N pieces of first channel information, and the compression and feedback method includes one or both of the following: a quantity of pieces of channel feedback information or a relationship between channel feedback information and first channel information, where one piece of first channel information corresponds to one or more pieces of channel feedback information.

In this embodiment of this application, for descriptions of the first information, the second information, the compression and feedback method for the N pieces of first channel information, and the like, refer to the descriptions in the method embodiment shown in FIG. 9 or FIG. 10. Details are not described herein again. It may be understood that, for specific descriptions of the logic circuit 901 and the interface 902, refer to the descriptions of the processing unit and the transceiver unit shown in FIG. 11. Details are not described herein again.

It may be understood that the communication apparatus shown in this embodiment of this application may implement the methods provided in embodiments of this application in a form of hardware, a form of software, or the like. This is not limited in this embodiment of this application.

For specific implementations of the embodiment shown in FIG. 13, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments (FIG. 6, FIG. 9, or FIG. 10).

In addition, this application further provides a computer program. The computer program is used to implement operations and/or processing performed by a first communication apparatus in the methods provided in this application.

This application further provides a computer program. The computer program is used to implement operations and/or processing performed by a second communication apparatus in the methods provided in this application.

This application further provides a computer-readable storage medium. The computer-readable storage medium stores computer code. When the computer code is run on a computer, the computer is caused to perform operations and/or processing performed by a first communication apparatus in the methods provided in this application.

This application further provides a computer-readable storage medium. The computer-readable storage medium stores computer code. When the computer code is run on a computer, the computer is caused to perform operations and/or processing performed by a second communication apparatus in the methods provided in this application.

This application further provides a computer program product. The computer program product includes computer code or a computer program. When the computer code or the computer program is run on a computer, operations and/or processing performed by a first communication apparatus in the methods provided in this application are/is performed.

This application further provides a computer program product. The computer program product includes computer code or a computer program. When the computer code or the computer program is run on a computer, operations and/or processing performed by a second communication apparatus in the methods provided in this application are/is performed.

In the several embodiments provided in this application, it should be understood that the disclosed system, apparatus, and method may be implemented in other manners. For example, the described apparatus embodiment is merely an example. For example, the division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the technical effects of the solutions provided in embodiments in this application.

In addition, the functional units in embodiments of this application may be integrated into one processing unit, the units may be physically separated, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to the prior art, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

obtaining N pieces of channel information, wherein N is an integer greater than or equal to 2; and
sending first information, wherein the first information indicates a compression and feedback method for the N pieces of channel information, and the compression and feedback method comprises one or both of the following: a quantity of pieces of channel feedback information or a correspondence between channel feedback information and channel information, wherein one piece of channel information corresponds to one or more pieces of channel feedback information.

2. The method according to claim 1, wherein after the sending the first information, the method further comprises: sending third information, wherein the third information comprises channel feedback information obtained by processing the N pieces of channel information by using the compression and feedback method indicated by the first information.

3. The method according to claim 1 or 2, wherein the obtaining the N pieces of channel information comprises:

   receiving N reference signals; and
   performing channel measurement based on the N reference signals to obtain the N pieces of channel information.

4. A communication method, wherein the method comprises:

   receiving first information, wherein the first information indicates a compression and feedback method for N pieces of channel information, and the compression and feedback method comprises one or both of the following: a quantity of pieces of channel feedback information or a correspondence between channel feedback information and channel information, wherein one piece of channel information corresponds to one or more pieces of channel feedback information, and N is an integer greater than or equal to 2; and
   determining the compression and feedback method based on the first information.

5. The method according to claim 4, wherein after the receiving the first information, the method further comprises:

   receiving third information, wherein the third information comprises channel feedback information obtained by processing the N pieces of channel information by using the compression and feedback method indicated by the first information; and
   recovering one or more pieces of channel information based on the compression and feedback method indicated by the first information and at least one piece of channel feedback information comprised in the third information.

6. The method according to claim 4 or 5, wherein before the receiving the first information, the method further comprises: sending one or more reference signals, wherein the reference signal is for determining channel information.

7. The method according to any one of claims 1 to 6, wherein the compression and feedback method for the N pieces of channel information comprises:
   the N pieces of channel information correspond to M+K pieces of channel feedback information, wherein one piece of channel feedback information in the K pieces of channel feedback information represents common information of at least two channel information subsets in M channel information subsets, one channel information subset comprises one or more pieces of channel information in the N pieces of channel information, a union set of the M channel information subsets is the N pieces of channel information, and one piece of channel feedback information in the M pieces of channel feedback information represents specific information of one channel information subset, wherein both M and K are positive integers less than N.

8. The method according to any one of claims 1 to 6, wherein the compression and feedback method for the N pieces of channel information comprises:
   the N pieces of channel information correspond to M pieces of channel feedback information, wherein one piece of channel feedback information represents content of one channel information subset, one channel information subset comprises one or more pieces of channel information in the N pieces of channel information, a union set of M channel information subsets is the N pieces of channel information, and an intersection set of any two channel information subsets in the M channel information subsets is an empty set, wherein M is a positive integer less than N.

9. The method according to claim 7 or 8, wherein the M channel information subsets are determined based on a correlation between the N pieces of channel information.

10. The method according to any one of claims 7 to 9, wherein a reference signal resource corresponding to channel information in one channel information subset belongs to one reference signal resource set.

11. The method according to any one of claims 1 to 6, wherein the compression and feedback method for the N pieces of channel information comprises:

the N pieces of channel information correspond to N pieces of channel feedback information, wherein one piece of channel feedback information represents content of one piece of channel information.

12. The method according to any one of claims 1 to 11, wherein the first information comprises an identifier of the compression and feedback method; or
the first information comprises one or both of the following: the quantity of pieces of channel feedback information corresponding to the N pieces of channel information or a correspondence between each piece of channel feedback information and one or more pieces of channel information in the N pieces of channel information.

13. The method according to any one of claims 1 to 12, wherein the compression and feedback method for the N pieces of channel information is determined based on a correlation between at least two pieces of channel information in the N pieces of channel information.

14. A communication method, performed by a first communication apparatus or a chip used in the first communication apparatus, wherein the method comprises:

   determining a compression and feedback method for N pieces of first channel information; and
   sending first information, wherein the first information indicates the compression and feedback method for the N pieces of first channel information, and the compression and feedback method comprises one or both of the following: a quantity of pieces of channel feedback information or a correspondence between channel feedback information and first channel information, wherein one piece of first channel information corresponds to one or more pieces of channel feedback information, and N is an integer greater than or equal to 2.

15. The method according to claim 14, wherein the method further comprises:

   receiving third information, wherein the third information comprises channel feedback information obtained by processing the N pieces of first channel information by using the compression and feedback method indicated by the first information; and
   recovering one or more pieces of first channel information based on the compression and feedback method and at least one piece of channel feedback information comprised in the third information.

16. The method according to claim 14 or 15, wherein before the determining the compression and feedback method for the N pieces of first channel information, the method further comprises:
receiving second information, wherein the second information comprises a correlation between at least two pieces of first channel information in the N pieces of first channel information, and the correlation between the at least two pieces of first channel information in the N pieces of first channel information is for determining the compression and feedback method for the N pieces of first channel information.

17. The method according to any one of claims 14 to 16, wherein the first channel information is determined based on a first reference signal; and
before the determining the compression and feedback method for the N pieces of first channel information, the method further comprises:

   receiving one or more second reference signals, wherein the second reference signals is for determining second channel information; and
   obtaining a correlation between at least two pieces of second channel information in L pieces of second channel information, wherein the correlation between the at least two pieces of second channel information in the L pieces of second channel information is for determining the compression and feedback method for the N pieces of first channel information, and L is an integer greater than or equal to 2.

18. A communication method, performed by a second communication apparatus or a chip used in the second communication apparatus, wherein the method comprises:

   obtaining N pieces of first channel information, wherein N is an integer greater than or equal to 2; and
   receiving first information, wherein the first information indicates a compression and feedback method for the N pieces of first channel information, and the compression and feedback method comprises one or both of the following: a quantity of pieces of channel feedback information or a relationship between channel feedback information and first channel information, wherein one piece of first channel information corresponds to one or more pieces of channel feedback information.

19. The method according to claim 18, wherein the method further comprises:
sending third information, wherein the third information comprises channel feedback information obtained by processing the N pieces of first channel information by using the compression and feedback method indicated by the first information.

20. The method according to claim 18 or 19, wherein after the obtaining the N pieces of first channel information, the method further comprises:
sending second information, wherein the second information comprises a correlation between at least two pieces of first channel information in the N pieces of first channel information, and the correlation between the at least two pieces of first channel information in the N pieces of first channel information is for determining the compression and feedback method for the N pieces of first channel information.

21. The method according to any one of claims 18 to 20, wherein the first channel information is determined based on a received first reference signal; and
before the obtaining the N pieces of first channel information, the method further comprises:
sending one or more second reference signals, wherein the second reference signal is for determining second channel information, and a correlation between second channel information is for determining the compression and feedback method for the N pieces of first channel information.

22. The method according to any one of claims 14 to 21, wherein the compression and feedback method for the N pieces of first channel information comprises:
the N pieces of first channel information correspond to M+K pieces of channel feedback information, wherein one piece of channel feedback information in the K pieces of channel feedback information represents common information of at least two channel information subsets in M channel information subsets, one channel information subset comprises one or more pieces of first channel information in the N pieces of first channel information, a union set of the M channel information subsets is the N pieces of first channel information, and one piece of channel feedback information in the M pieces of channel feedback information represents specific information of one channel information subset, wherein both M and K are positive integers less than N.

23. The method according to any one of claims 14 to 21, wherein the compression and feedback method for the N pieces of first channel information comprises:
the N pieces of first channel information correspond to M pieces of channel feedback information, wherein one piece of channel feedback information represents content of one channel information subset, one channel information subset comprises one or more pieces of first channel information in the N pieces of first channel information, a union set of M channel information subsets is the N pieces of first channel information, and an intersection set of any two channel information subsets in the M channel information subsets is an empty set, wherein M is a positive integer less than N.

24. The method according to claim 22 or 23, wherein the M channel information subsets are determined based on a correlation between the N pieces of first channel information.

25. The method according to any one of claims 22 to 24, wherein a reference signal resource corresponding to first channel information in one channel information subset belongs to one reference signal resource set.

26. The method according to any one of claims 14 to 21, wherein the compression and feedback method for the N pieces of first channel information comprises:
the N pieces of first channel information correspond to N pieces of channel feedback information, wherein one piece of channel feedback information represents content of one piece of first channel information.

27. The method according to any one of claims 14 to 26, wherein the first information comprises an identifier of the compression and feedback method; or
the first information comprises one or both of the following: the quantity of pieces of channel feedback information corresponding to the N pieces of first channel information or a correspondence between each piece of channel feedback information and one or more pieces of first channel information in the N pieces of first channel information.

28. A communication apparatus, comprising a module or a unit configured to perform the method according to any one of claims 1 to 27.

**29.** A communication apparatus, comprising a processing circuit and a transceiver circuit, wherein the transceiver circuit is configured to: receive a signal from another communication apparatus and transmit the signal to the processing circuit, or send, to another communication apparatus, a signal that is from the processing circuit; and the processing circuit is configured to implement the method according to any one of claims 1 to 27 by using a logic circuit or by executing code instructions.

**30.** A communication system, comprising: an apparatus configured to perform the method according to any one of claims 1 to 3 and 7 to 13 and an apparatus configured to perform the method according to any one of claims 4 to 13; or an apparatus configured to perform the method according to any one of claims 14 to 17 and 22 to 27 and an apparatus configured to perform the method according to any one of claims 18 to 27.

Weight
Neuron Layer value

Input
layer

Output
layer

Hidden
layer

FIG. 1

$w_0x_0$

Neuron

$w_1x_1$

$\vdots$

$y = f(\sum_{i=0}^{m} w_i x_i + b)$

y

$w_mx_m$

FIG. 2

100

120j

120i

110a

120c

110b

120f

120g

120h

120a

120d

120b

120e

FIG. 3

FIG. 4

FIG. 5

Another communication apparatus (for example, base station) | First communication apparatus (for example, base station) | Second communication apparatus (for example, UE)

S101: Send one or more reference signals

Send one or more reference signals

S102: Receive N reference signals

S103: Perform channel measurement based on the N reference signals to obtain N pieces of channel information

S104: Send first information, where the first information indicates a compression and feedback method for the N pieces of channel information, and the compression and feedback method includes one or both of the following: a quantity of pieces of channel feedback information or a correspondence between channel feedback information and channel information

S105: Determine the compression and feedback method for the N pieces of channel information based on the first information

S106: Send third information, where the third information includes channel feedback information obtained by processing the N pieces of channel information by using the compression and feedback method indicated by the first information

S107: Recover one or more pieces of channel information based on the compression and feedback method indicated by the first information and at least one piece of channel feedback information included in the third information

FIG. 6

FIG. 7a

FIG. 7b

FIG. 7c

FIG. 7d

FIG. 8a

Decoder
decoder

FIG. 8b

Decoder
decoder

$c_1$

$s_1$

$\bar{H}_1'$

$c_2$

$s_1$

$\bar{H}_2'$

$c_M$

$s_j$

$\bar{H}_M'$

FIG. 8c

FIG. 8d

Another communication apparatus (for example, base station)

First communication apparatus (for example, base station)

Second communication apparatus (for example, UE)

S201: Send one or more reference signals

Send one or more reference signals

S202: Receive N reference signals

S203: Perform channel measurement based on the N reference signals to obtain N pieces of channel information

S204: Send second information, where the second information includes a correlation between at least two pieces of channel information in the N pieces of channel information

S205: Determine a compression and feedback method for the N pieces of channel information based on the second information

S206: Send first information, where the first information indicates the compression and feedback method for the N pieces of channel information, and the compression and feedback method includes one or both of the following: a quantity of pieces of channel feedback information or a correspondence between channel feedback information and channel information

S207: Send third information, where the third information includes channel feedback information obtained by processing the N pieces of channel information by using the compression and feedback method indicated by the first information

S208: Recover one or more pieces of channel information based on the compression and feedback method indicated by the first information and at least one piece of channel feedback information included in the third information

FIG. 9

EP 4 779 905 A1

FIG. 10

Transceiver
unit  / 10

Processing
unit  / 20

Communication
apparatus

FIG. 11

Communication apparatus

1001

Processing circuit
¦Instructions¦

1003

¦Storage circuit¦
¦Instructions¦¦

Transceiver
circuit  1002
¦Control circuit¦
¦Antenna¦

FIG. 12

Logic circuit (or processing circuit) / 901

Chip

Interface / 902

FIG. 13

## INTERNATIONAL SEARCH REPORT

| International application No. |
| --- |
| **PCT/CN2024/121595** |

| A. | CLASSIFICATION OF SUBJECT MATTER |
| --- | --- |

H04B17/309(2015.01)i; H04B7/0417(2017.01)i

According to International Patent Classification (IPC) or to both national classification and IPC

| B. | FIELDS SEARCHED |
| --- | --- |

Minimum documentation searched (classification system followed by classification symbols)

IPC: H04B; H04W; H04L

Documentation searched other than minimum documentation to the extent that such documents are included in the fields searched

Electronic data base consulted during the international search (name of data base and, where practicable, search terms used)

CNTXT; CNKI; ENTXTC; ENTXT; VEN; 3GPP: 压缩, 反馈, 人工智能, 机器训练, 神经网络, 编码器, 相关性, 数量, 数目, 信道信息, channel state, encoder, number, compress, correlation, silmilarity, NN, BP, AI, ML, CSI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023087136 A1 (QUALCOMM INC.) 25 May 2023 (2023-05-25) description, paragraphs 63-300 | 1-6, 11-21, 26-30 |
| X | CN 116436551 A (HUAWEI TECHNOLOGIES CO., LTD.) 14 July 2023 (2023-07-14) description, paragraphs 130-255 | 1-6, 14, 15, 18, 19, 27-30 |
| A | CN 116260494 A (ZTE CORP.) 13 June 2023 (2023-06-13) entire document | 1-30 |
| A | WO 2023135820 A1 (NTT DOCOMO INC.) 20 July 2023 (2023-07-20) entire document | 1-30 |
| A | WO 2022236785 A1 (GUANGDONG OPPO MOBILE TELECOMMUNICATIONS CORP., LTD.) 17 November 2022 (2022-11-17) entire document | 1-30 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 November 2024** | **27 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121595**

| Patent document cited in search report | | | Publication date (day/month/year) | Patent family member(s) | | | Publication date (day/month/year) |
|---|---|---|---|---|---|---|---|
| WO | 2023087136 | A1 | 25 May 2023 | EP | 4434256 | A1 | 25 September 2024 |
| | | | | CN | 118285136 | A | 02 July 2024 |
| CN | 116436551 | A | 14 July 2023 | WO | 2023126007 | A1 | 06 July 2023 |
| CN | 116260494 | A | 13 June 2023 | WO | 2023104205 | A1 | 15 June 2023 |
| | | | | EP | 4447337 | A1 | 16 October 2024 |
| WO | 2023135820 | A1 | 20 July 2023 | None | | | |
| WO | 2022236785 | A1 | 17 November 2022 | CN | 116941198 | A | 24 October 2023 |

Form PCT/ISA/210 (patent family annex) (July 2022)

**REFERENCES CITED IN THE DESCRIPTION**

**Patent documents cited in the description**

- CN 202311281404